# EUROPÄISCHE PATENTSCHRIFT

(11) **EP 3 987 697 B1**
(45) Veröffentlichungstag und Bekanntmachung des Hinweises auf die Patenterteilung: **24.08.2022**
(21) Anmeldenummer: 20780630.8
(22) Anmeldetag: 23.09.2020
(51) Int. Cl.: H04L 1/00, H04L 12/40

(54) **VERFAHREN ZUM BETREIBEN EINES KOMMUNIKATIONSNETZWERKS, KOMMUNIKATIONSNETZWERK UND TEILNEHMER FÜR EIN KOMMUNIKATIONSNETZWERK**
METHOD FOR OPERATING A COMMUNICATION NETWORK, COMMUNICATION NETWORK, AND SUBSCRIBERS FOR A COMMUNICATION NETWORK
PROCÉDÉ D'EXPLOITATION D'UN RÉSEAU DE COMMUNICATION, RÉSEAU DE COMMUNICATION ET ABONNÉS D'UN RÉSEAU DE COMMUNICATION

(30) Priorität: 24.09.2019 DE 102019125693
(43) Veröffentlichungstag der Anmeldung: 27.04.2022
(73) Patentinhaber: Beckhoff Automation GmbH, 33415 Verl (DE)
(72) Erfinder: BÜTTNER, Holger, 12205 Berlin (DE); JANSSEN, Dirk, 33415 Verl (DE); VONNAHME, Erik, 33154 Salzkotten (DE); BECKHOFF, Hans, 33415 Verl (DE); RETTIG, Thomas, 33378 Rheda-Wiedenbrück (DE); BUNTE, Thorsten, 33335 Gütersloh (DE); BECKHOFF, Johannes, 33758 Schloß Holte-Stukenbrock (DE); BECKMANN, Guido, 33415 Verl (DE)
(74) Vertreter: Patentanwaltskanzlei WILHELM & BECK
(86) Internationale Anmeldenummer: PCT/EP2020/076564
(87) Internationale Veröffentlichungsnummer: WO 2021/058561

(56) Entgegenhaltungen:
- WO-A1-2016/110326
- N/a: "EtherCAT Slave Controller, version 2.2", Beckhoff, 7. Juli 2014 (2014-07-07), Seiten 1-96, XP055308866, Gefunden im Internet: URL:https://download.beckhoff.com/download /document/io/ethercat-development-products /ethercat_esc_datasheet_sec1_technology_2i 2.pdf [gefunden am 2016-10-10]

## Beschreibung

Die vorliegende Erfindung betrifft ein Verfahren zum Betreiben eines Kommunikationsnetzwerks umfassend mehrere Teilnehmer. Die Erfindung betrifft des Weiteren ein Kommunikationsnetzwerk und einen Teilnehmer für ein Kommunikationsnetzwerk.

In einem Kommunikationsnetzwerk mit mehreren Teilnehmern können Informationen zwischen den Teilnehmern in Form von diskreten Datenpaketen, auch als Telegramme bezeichnet, übertragen werden. Das Kommunikationsnetzwerk kann in Form eines Ethernet-basierten Feldbussystems verwirklicht sein, in welchem der Datenaustausch gemäß dem Ethernet-Standard erfolgt. Hierbei können die Telegramme eine Mehrzahl an Datenabschnitten mit einer Datenmenge von jeweils einem Byte aufweisen.

Die Telegramme können von den Teilnehmern im Durchlauf verarbeitet werden, d.h. dass die Telegramme von den Teilnehmern während des Empfangens an einen weiteren Teilnehmer weitergesendet werden. Die Telegramme können am Ende einen mehrere Datenabschnitte umfassenden und als Prüfwert von den Teilnehmern interpretierten Endbereich aufweisen. Anhand des Prüfwerts, welcher sich auf vorhergehende Datenabschnitte beziehen kann, kann überprüft werden, ob die betreffenden Datenabschnitte fehlerfrei oder mit einem Fehler behaftet sind.

Bei einem Telegramm, welches im Durchlauf von einem Teilnehmer verarbeitet wird, können Inhalte des Telegramms verändert werden. Dies macht es erforderlich, auch den Prüfwert des Telegramms zu verändern. Zu diesem Zweck kann der Teilnehmer sowohl einen Prüfwert über empfangene Datenabschnitte als auch einen Prüfwert über gesendete Datenabschnitte berechnen. Sofern der Teilnehmer beim Vergleichen des berechneten Prüfwerts über die empfangenen Datenabschnitte mit dem durch den Endbereich des empfangenen Telegramms wiedergegebenen Prüfwert einen Unterschied zwischen den beiden Prüfwerten und damit einen Fehler erkennt, darf er auch keinen gültigen Prüfwert senden. Infolge der Durchlaufverarbeitung kann jedoch bereits ein Teil des den berechneten (gültigen) Prüfwert wiedergebenden Endbereichs gesendet sein. In diesem Fall kann der Teilnehmer einen manipulierten restlichen Teil des Endbereichs senden, so dass dem nachfolgenden Teilnehmer ein fehlerhafter Prüfwert übermittelt wird. Hierdurch kann der nachfolgende Teilnehmer erkennen, dass das bei ihm ansonsten korrekt empfangene Telegramm fehlerhaft ist.

In diesem Zusammenhang ist es ferner wünschenswert, dem folgenden Teilnehmer zu erkennen zu geben, dass der Fehler schon vorher erkannt wurde. Bei einem Ethernet-basierten System mit einer Übertragungsrate von 100 Mbit/s, bei welchem Daten in 4-Bit-Einheiten als 5-Bit-Einheiten (Symbolen) kodiert physikalisch übertragen werden (4B5B-Kodierung), kann der Teilnehmer im Anschluss an das Senden des Prüfwert-Endbereichs noch ein Nibble (halbes Byte bzw. vier Bits) an den folgenden Teilnehmer senden. Der folgende Teilnehmer kann auf diese Weise erkennen, dass der Fehler bereits vorher erkannt wurde, und das Telegramm insofern als Folgefehler berücksichtigen. Dadurch besteht die Möglichkeit, die Fehlerquelle zu lokalisieren. Bei einem Ethernet-basierten System mit einer Übertragungsrate von 1 Gbit/s, bei welchem Daten in 8-Bit-Einheiten als 10-Bit-Einheiten (Symbolen) kodiert physikalisch übertragen werden (8B10B-Kodierung), steht die vorgenannte Vorgehensweise aufgrund der eingesetzten Übertragungstechnik nicht zur Verfügung.

Die Druckschrift "EtherCAT Slave Controller, Version 2.2", Beckhoff, 7. Juli 2014, Seiten 1 bis 96, XP055308866 beschreibt ein Verfahren zum Betreiben eines Kommunikationsnetzwerks, bei welchem die vorstehend beschriebene Vorgehensweise zum Einsatz kommt, nach einem Prüfwert-Endbereich ein zusätzliches Nibble durch einen Teilnehmer an einen nachfolgen Teilnehmer zu senden.

Weiterer Stand der Technik ist aus der WO 2016/110326 A1 bekannt.

Die Aufgabe der vorliegenden Erfindung besteht darin, ein verbessertes Verfahren zum Betreiben eines Kommunikationsnetzwerks anzugeben, bei welchem ein Teilnehmer einem nächsten Teilnehmer ein Telegramm mit einem absichtlich falschen Prüfwert-Endbereich übermittelt und dem nächsten Teilnehmer ferner zu erkennen gegeben wird, dass das fehlerhafte Telegramm nicht als Erstfehler sondern als Folgefehler betrachtet werden soll. Es ist weiterhin Aufgabe der Erfindung, ein entsprechend ausgebildetes Kommunikationsnetzwerk und einen entsprechend ausgebildeten Teilnehmer für ein Kommunikationsnetzwerk anzugeben.

Diese Aufgabe wird durch die Merkmale der unabhängigen Patentansprüche gelöst. Weitere vorteilhafte Ausführungsformen der Erfindung sind in den abhängigen Ansprüchen angegeben.

Gemäß einem Aspekt der Erfindung wird ein Verfahren zum Betreiben eines Kommunikationsnetzwerks vorgeschlagen. Das Kommunikationsnetzwerk umfasst mehrere Teilnehmer. Ein Datenaustausch in dem Kommunikationsnetzwerk zwischen den Teilnehmern erfolgt in Form von Telegrammen, welche mehrere Datenabschnitte aufweisen. Die Teilnehmer interpretieren einen Endbereich der Telegramme als Prüfwert zum Überprüfen einer Fehlerfreiheit von vorhergehenden Datenabschnitten der Telegramme. Die Telegramme werden von den Teilnehmern im Durchlauf verarbeitet, so dass die Telegramme von den Teilnehmern empfangen und während des Empfangens an einen jeweils nächsten Teilnehmer weitergesendet werden. Für den Fall, dass beim Empfangen eines Telegramms ein Fehler des Telegramms festgestellt wird, führen die Teilnehmer das Senden des betreffenden Telegramms an einen nächsten Teilnehmer mit einem kennzeichnenden Datenabschnitt des Telegramms an dessen Ende durch, so dass das an den nächsten Teilnehmer gesendete Telegramm einen Endbereich aufweist, welcher einen ungültigen Prüfwert wiedergibt. Mit Hilfe des kennzeichnenden Datenabschnitts, welcher Bestandteil des als Prüfwert interpretierten Endbereichs des Telegramms ist, wird das Telegramm für den nächsten Teilnehmer derart gekennzeichnet, dass das Telegramm nicht als Erstfehler sondern als Folgefehler zu berücksichtigen ist.

Das Verfahren basiert darauf, im Falle eines festgestellten Fehlers beim Empfangen eines Telegramms durch einen Teilnehmer das Senden des Telegramms an einen nächsten Teilnehmer mit einem kennzeichnenden Datenabschnitt am Telegrammende durchzuführen. Dies erfolgt derart, dass das an den nächsten Teilnehmer gesendete Telegramm einen Endbereich aufweist, welcher einen ungültigen Prüfwert, oder mit anderen Worten einen falschen bzw. einen Fehler anzeigenden Prüfwert für zuvor an den nächsten Teilnehmer gesendete Datenabschnitte des Telegramms wiedergibt. Des Weiteren wird das Telegramm durch den kennzeichnenden Datenabschnitt dahingehend für den nächsten Teilnehmer gekennzeichnet, dass der Fehler bereits vorher erkannt wurde, und insofern das Telegramm durch den nächsten Teilnehmer nicht als Erstfehler sondern stattdessen als Folgefehler zu berücksichtigen ist. Hierauf basierend lässt sich die Fehlerquelle, also bei welchem Teilnehmer der Fehler zuerst aufgetreten ist, lokalisieren.

Das Senden eines Telegramms mit einem solchen kennzeichnenden Datenabschnitt des Telegramms an dessen Ende bietet die Möglichkeit, das Kennzeichnen des Telegramms als Folgefehler mit einer hohen Zuverlässigkeit zu verwirklichen. Darüber hinaus ist das vorgeschlagene Vorgehen universell einsetzbar und eignet sich für eine Vielzahl unterschiedlicher Ausgestaltungen von Kommunikationsnetzwerken bzw. Feldbussystemen, bei welchen Telegramme im Durchlauf verarbeitet werden.

Im Folgenden werden weitere mögliche Details und Ausführungsformen näher beschrieben, welche für das Verfahren in Betracht kommen können.

Es kann vorgesehen sein, dass die Teilnehmer jeweils für empfangene Telegramme bzw. Datenabschnitte empfangener Telegramme einen gültigen Prüfwert ermitteln. Durch Vergleichen des ermittelten Prüfwerts mit dem durch den Endbereich wiedergegebenen Prüfwert des empfangenen Telegramms kann, sofern hierbei ein Unterschied vorliegt, ein Fehler (Prüfwertfehler) festgestellt werden. Weitere mögliche Fehler werden weiter unten näher erläutert. Ferner können die Teilnehmer jeweils für gesendete Telegramme bzw. Datenabschnitte gesendeter Telegramme einen gültigen Prüfwert ermitteln. Dies kann im Zusammenhang mit einem Auswählen bzw. Festlegen des kennzeichnenden Datenabschnitts in Betracht kommen, wie es ebenfalls weiter unten näher erläutert wird.

Die Datenabschnitte der Telegramme, einschließlich eines zur Kennzeichnung eines Telegramms verwendeten kennzeichnenden Datenabschnitts, können jeweils dieselbe Datenmenge aufweisen. Beispielsweise können die Datenabschnitte jeweils ein Byte bzw. acht Bits umfassen.

Dies ist zum Beispiel der Fall bei einer möglichen Ausführungsform, in welcher das Kommunikationsnetzwerk ein Ethernet-basiertes Feldbussystem ist. Hierbei kann es sich um ein System mit einer Übertagungsrate von zum Beispiel 1 Gbit/s handeln. Möglich ist des Weiteren zum Beispiel eine Ausgestaltung in Form eines EtherCAT-Feldbussystems.

Der von den Teilnehmern als Prüfwert interpretierte Endbereich der Telegramme kann mehrere Datenabschnitte umfassen. Möglich sind zum Beispiel vier Datenabschnitte.

Bei einem Telegramm, welches von einem Teilnehmer mit einem kennzeichnenden Datenabschnitt versehen an einen nächsten Teilnehmer gesendet wird, ist der kennzeichnende Datenabschnitt Bestandteil des als Prüfwert interpretierten Endbereichs des Telegramms. Hierbei kann sich der kennzeichnende Datenabschnitt am Ende des Prüfwert-Endbereichs befinden und der letzte Datenabschnitt des Endbereichs sein.

Mit Bezug auf oben genannte Ausgestaltungen kann der Prüfwert-Endbereich vier Datenabschnitte und insofern vier Bytes umfassen. Sofern ein Telegramm mit einem kennzeichnenden Datenabschnitt versehen an einen nächsten Teilnehmer gesendet wird, kann der kennzeichnende Datenabschnitt der letzte bzw. vierte Datenabschnitt des Prüfwert-Endbereichs sein.

Im Hinblick auf einen in dem Verfahren verwendeten kennzeichnenden Datenabschnitt wird dieser Datenabschnitt derart von einem Teilnehmer bereitgestellt bzw. eingestellt, dass der das dazugehörige Telegramm empfangende nächste Teilnehmer die hiermit verbundene Kennzeichnung erkennen und infolgedessen das Telegramm als Folgefehler berücksichtigen kann. Hierbei können folgende Ausführungsformen in Betracht kommen.

In einer möglichen Ausführungsform wählen die Teilnehmer den kennzeichnenden Datenabschnitt aus einer Gruppe umfassend mehrere unterschiedliche vorgegebene Datenabschnitte aus. Auf diese Weise lässt sich das Kennzeichnen eines von einem Teilnehmer an einen nächsten Teilnehmer gesendeten Telegramms auf einfache und zuverlässige Weise verwirklichen. Hierbei können die vorgegebenen Datenabschnitte in den Teilnehmern hinterlegt sein. Sofern ein Teilnehmer ein Telegramm mit einem Endbereich empfängt, welcher einen ungültigen Prüfwert wiedergibt, und das Telegramm zudem einen von den vorgegebenen Datenabschnitten als kennzeichnenden Datenabschnitt aufweist, kann der betreffende Teilnehmer die auf diese Weise erzielte Kennzeichnung des Telegramms erkennen und das Telegramm infolgedessen als Folgefehler berücksichtigen.

Die vorgenannte Gruppe kann zum Beispiel zwei unterschiedliche vorgegebene Datenabschnitte, im Folgenden als erster und zweiter vorgegebener Datenabschnitt bezeichnet, umfassen. Der erste und der zweite vorgegebene Datenabschnitt können zum Beispiel zueinander invertierte Datenabschnitte sein.

In einer weiteren Ausführungsform wird für das Auswählen durch die Teilnehmer überprüft, ob bei einem Senden des ersten vorgegebenen Datenabschnitts ein gültiger berechneter Prüfwert, oder mit anderen Worten ein richtiger bzw. eine Fehlerfreiheit anzeigender berechneter Prüfwert für zuvor gesendete Datenabschnitte vorliegt. Sofern dies nicht der Fall ist und ein ungültiger berechneter Prüfwert vorliegt, wird der erste vorgegebene Datenabschnitt von den Teilnehmern als kennzeichnender Datenabschnitt ausgewählt. Sofern hingegen festgestellt wird, dass bei einem Senden des ersten vorgegebenen Datenabschnitts ein gültiger und damit eine Fehlerfreiheit anzeigender berechneter Prüfwert vorliegt, wird der zweite vorgegebene Datenabschnitt als kennzeichnender Datenabschnitt von den Teilnehmern ausgewählt. Auf diese Weise kann sichergestellt werden, dass ein an einen nächsten Teilnehmer gesendetes Telegramm einen Endbereich aufweist, welcher einen ungültigen Prüfwert wiedergibt.

In einer weiteren Ausführungsform wird für das Auswählen durch die Teilnehmer überprüft, ob bei einem Senden des ersten vorgegebenen Datenabschnitts und bei einem Senden des zweiten vorgegebenen Datenabschnitts jeweils ein ungültiger und damit einen Fehler anzeigender berechneter Prüfwert für zuvor gesendete Datenabschnitte vorliegt. Für den Fall bzw. sofern festgestellt wird, dass bei einem von dem ersten und dem zweiten vorgegebenen Datenabschnitt ein gültiger und eine Fehlerfreiheit anzeigender berechneter Prüfwert vorliegt, wird der andere von dem ersten und dem zweiten vorgegebenen Datenabschnitt als kennzeichnender Datenabschnitt von den Teilnehmern ausgewählt. In dem hiervon abweichenden Fall, dass jeweils ein ungültiger berechneter Prüfwert vorliegt, wird derjenige von dem ersten und dem zweiten vorgegebenen Datenabschnitt als kennzeichnender Datenabschnitt von den Teilnehmern ausgewählt, mit dessen Verwendung ein größerer Unterschied zu einem gültigen und eine Fehlerfreiheit anzeigenden berechneten Prüfwert für zuvor gesendete Datenabschnitte erzielt werden kann. Auch auf diese Weise kann erreicht werden, dass ein an einen nächsten Teilnehmer gesendetes Telegramm einen Endbereich aufweist, welcher einen ungültigen Prüfwert wiedergibt. Zudem kann erzielt werden, dass sich der durch den Endbereich wiedergegebene ungültige Prüfwert möglichst groß von einem gültigen Prüfwert unterscheidet. Hierdurch lässt sich mit einer hohen Zuverlässigkeit vermeiden, dass bei einem Senden eines gekennzeichneten Telegramms an einen nächsten Teilnehmer und einem hierbei gegebenenfalls auftretenden (weiteren) Fehlerfall der nächste Teilnehmer ein Telegramm mit einem Endbereich empfängt, welcher ein Vorliegen eines gültigen Prüfwerts vermittelt.

In einer weiteren Ausführungsform legen die Teilnehmer den kennzeichnenden Datenabschnitt durch Durchführen einer vorgegebenen Berechnung unter Verwendung wenigstens eines zuvor gesendeten Datenabschnitts, d.h. wenigstens eines zuvor an einen nächsten Teilnehmer gesendeten Datenabschnitts des dazugehörigen Telegramms, fest. Diese Vorgehensweise bietet ebenfalls die Möglichkeit, das Kennzeichnen eines Telegramms mit einer hohen Zuverlässigkeit durchzuführen. Ein gemäß dem vorgenannten Vorgehen bereitgestellter kennzeichnender Datenabschnitt ist hierbei in einer für einen nächsten Teilnehmer nachvollziehbaren Weise mit wenigstens einem an den nächsten Teilnehmer zuvor gesendeten Datenabschnitt verknüpft. Denn die Teilnehmer sind hierbei jeweils zum Durchführen derselben Berechnungsschritte ausgebildet. Sofern ein Teilnehmer ein Telegramm mit einem Endbereich empfängt, welcher einen ungültigen und einen Fehler anzeigenden Prüfwert wiedergibt, und das Telegramm zudem einen auf der Grundlage der vorgegebenen Berechnung erstellten und dadurch mit wenigstens einem zuvor gesendeten Datenabschnitt in erkennbarer Weise verknüpften kennzeichnenden Datenabschnitt aufweist, kann der betreffende Teilnehmer durch Durchführen einer analogen Berechnung unter Verwendung wenigstens eines empfangenen Datenabschnitts die auf diese Weise erzielte Kennzeichnung des empfangenen Telegramms nachvollziehen und das Telegramm infolgedessen als Folgefehler berücksichtigen.

In einer weiteren Ausführungsform umfasst das Durchführen der vorgegebenen Berechnung ein Ermitteln eines gültigen und damit eine Fehlerfreiheit anzeigenden Prüfwerts für zuvor gesendete Datenabschnitte und ein Bilden eines Alternativwerts durch Anwenden eines vorgegebenen Berechnungsalgorithmus auf einen Teilwert des ermittelten gültigen Prüfwerts an dessen Ende. Für das Ermitteln des gültigen Prüfwerts kann ein fiktives fehlerfreies Telegramm betrachtet bzw. berechnet werden, bei dessen Senden der gültige Prüfwert vorliegen würde, und bei dessen Senden somit dem nächsten Teilnehmer hinsichtlich des Prüfwerts eine Fehlerfreiheit angezeigt würde. Der gebildete Alternativwert wird hierbei als kennzeichnender Datenabschnitt festgelegt. Wie oben angegeben wurde, kann der Prüfwert-Endbereich eines Telegramms mehrere Datenabschnitte aufweisen. In entsprechender Weise kann der Prüfwert mehrere Teilwerte umfassen. Hierbei wird für den sich am Ende des fiktiven gültigen Prüfwerts befindenden Teilwert ein Alternativwert mittels eines vorgegebenen Berechnungsalgorithmus berechnet. Dieser Alternativwert wird als kennzeichnender Datenabschnitt verwendet. Dies hat zur Folge, dass das an einen nächsten Teilnehmer übermittelte Telegramm in nachvollziehbarer Weise für den nächsten Teilnehmer gekennzeichnet ist und dadurch von diesem als Folgefehler betrachtet werden kann.

In einer weiteren Ausführungsform ist der Berechnungsalgorithmus ein Invertieren. Hiervon abweichend können auch andere beliebige Berechnungsalgorithmen zur Anwendung kommen.

Das oben angedeutete Lokalisieren von einer (oder auch mehreren) Fehlerquelle(n) lässt sich anhand von nicht gekennzeichneten und damit als Erstfehler zu berücksichtigenden Telegrammen und gegebenenfalls zusätzlich anhand von gekennzeichneten und damit als Folgefehler zu berücksichtigenden Telegrammen zuverlässig verwirklichen. Hinsichtlich der Teilnehmer des Kommunikationsnetzwerks kann in diesem Zusammenhang vorgesehen sein, dass die Teilnehmer entsprechende Zähler aufweisen.

Diesbezüglich ist gemäß einer weiteren Ausführungsform vorgesehen, dass die Teilnehmer einen sich auf einen Erstfehler beziehenden Fehlerzähler aufweisen. Für den Fall, dass die Teilnehmer beim Empfangen eines Telegramms einen Fehler feststellen und das Telegramm keinen kennzeichnenden Datenabschnitt an dessen Ende aufweist, wird der sich auf den Erstfehler beziehende Fehlerzähler der Teilnehmer inkrementiert. In dieser Ausführungsform können durch Auswerten der Erstfehler-Fehlerzähler der Teilnehmer eine oder mehrere Fehlerstellen in dem Kommunikationsnetzwerk lokalisiert werden.

In einer weiteren Ausführungsform ist vorgesehen, dass die Teilnehmer ferner eine Fehlerart des festgestellten Fehlers bzw. Erstfehlers ermitteln und ein sich auf die Fehlerart beziehender Fehlerzähler der Teilnehmer inkrementiert wird. Diese Ausführungsform kann zur Anwendung kommen, wenn im Betrieb des Kommunikationsnetzwerks unterschiedliche Fehlerarten bei der Datenübertragung auftreten können. Beispiele hierfür werden weiter unten näher erläutert. Die Teilnehmer können in diesem Zusammenhang für die unterschiedlichen Fehlerarten jeweils einen entsprechenden Fehlerzähler aufweisen, und nach Ermitteln einer Fehlerart den zugehörigen Fehlerzähler inkrementieren. Durch Auswerten der Fehlerart-Fehlerzähler der Teilnehmer können zum Beispiel statistische Aussagen über in dem Kommunikationsnetzwerk aufgetretene unterschiedliche Fehler getroffen werden.

In einer weiteren Ausführungsform weisen die Teilnehmer einen sich auf einen Folgefehler beziehenden Fehlerzähler auf. Für den Fall, dass die Teilnehmer beim Empfangen eines Telegramms einen Fehler feststellen und das Telegramm einen kennzeichnenden Datenabschnitt an dessen Ende aufweist, wird der sich auf den Folgefehler beziehende Fehlerzähler der Teilnehmer inkrementiert. In diesem Zusammenhang können durch Auswerten der Erstfehler-Fehlerzähler und der Folgefehler-Fehlerzähler der Teilnehmer eine oder mehrere Fehlerstellen in dem Kommunikationsnetzwerk lokalisiert werden.

Wie vorstehend angedeutet wurde, können im Betrieb des Kommunikationsnetzwerks unterschiedliche Fehlerarten beim Datenaustausch auftreten.

Es ist zum Beispiel möglich, dass bei der Datenübertragung Dateneinheiten in Form von kodierten Dateneinheiten bzw. Symbolen physikalisch übertragen werden, wie es zum Beispiel bei Ethernet-basierten Systemen zur Anwendung kommt. Hierbei kann eine Störung dazu führen, dass beim Empfangen eines Telegramms ein nicht vergebenes bzw. ungültiges Symbol empfangen wird. Dieser Fehlerfall wird auch als Symbolfehler bezeichnet.

Die Telegramme können ferner eine Längeninformation enthalten, also eine Information über die Anzahl der Datenabschnitte eines Telegramms. Durch eine Störung kann es dazu kommen, dass ein Teilnehmer beim Empfangen eines Telegramms eine von der Längeninformation abweichende größere oder kleinere Anzahl an Datenabschnitten empfängt. Dieser Fehlerfall wird auch als Längenfehler bezeichnet.

Sofern die Telegramme eine Längeninformation enthalten, kann ein Fehler ferner darin bestehen, dass ein Teilnehmer beim Empfangen eines Telegramms zwar eine der Längeninformation entsprechende Anzahl von Datenabschnitten empfängt, jedoch der Endbereich des empfangenen Telegramms einen ungültigen und damit einen Fehler anzeigenden Prüfwert wiedergibt. Hierbei kann der sich auf vorhergehende Datenabschnitte des Telegramms beziehende und durch den empfangenen Endbereich wiedergegebene Prüfwert von einem anhand der vorhergehenden Datenabschnitte ermittelten erwarteten Prüfwert abweichen. Dieser Fehlerfall wird auch als Prüfwertfehler bezeichnet.

Möglich ist auch eine Ausgestaltung, in welcher die Telegramme keine Längeninformation enthalten. Auch hier wird der Endbereich der Telegramme von den Teilnehmern als Prüfwert interpretiert. Beim Empfangen eines Telegramms kann in entsprechender Weise der Endbereich des empfangenen Telegramms einen ungültigen und damit einen Fehler anzeigenden Prüfwert wiedergeben, so dass ein Prüfwertfehler vorliegt.

Das vorgeschlagene Verfahren und dessen Ausführungsformen können in Bezug auf sämtliche der vorgenannten Fehlerarten zur Anwendung kommen. Sofern beim Empfangen eines Telegramms durch einen Teilnehmer einer der genannten Fehler festgestellt wird, erfolgt das Weitersenden des Telegramms in der oben genannten Weise, also mit einem kennzeichnenden Datenabschnitt an dessen Ende. Für den Fall, dass das von dem Teilnehmer empfangene fehlerhafte Telegramm nicht gekennzeichnet ist, wird das Telegramm als Erstfehler berücksichtigt. Hierzu kann ein Erstfehler-Fehlerzähler des Teilnehmers und gegebenenfalls ein weiterer, sich auf die Fehlerart beziehender Fehlerzähler inkrementiert werden. Sofern das von dem Teilnehmer empfangene Telegramm mit einem kennzeichnenden Datenabschnitt an dessen Ende gekennzeichnet ist, wird das Telegramm als Folgefehler berücksichtigt. Hierzu kann ein Folgefehler-Fehlerzähler des Teilnehmers inkrementiert werden.

In einer weiteren Ausführungsform ist vorgesehen, dass die Teilnehmer für den Fall, dass beim Empfangen eines Telegramms ein Fehler festgestellt wird, abhängig von einer Fehlerart des festgestellten Fehlers das Senden des Telegramms an einen nächsten Teilnehmer durch Senden des kennzeichnenden Datenabschnitts vorzeitig beenden. Diese Ausgestaltung kann zum Beispiel in Betracht kommen, sofern durch einen Teilnehmer ein Symbolfehler oder ein Längenfehler in Form eines Telegramms mit einer von einer Längeninformation abweichenden Anzahl an Datenabschnitten festgestellt wird. Durch das vorzeitige Beenden kann das an den nächsten Teilnehmer gesendete Telegramm (ebenfalls) einen Längenfehler aufweisen. In dieser Ausführungsform ist es möglich, dass das Vorliegen eines einen ungültigen Prüfwert wiedergebenden Endbereichs des an den nächsten Teilnehmer gesendeten Telegramms eine Folge des vorzeitigen Beendens des Telegramms durch Senden des kennzeichnenden Datenabschnitts ist.

In einer weiteren Ausführungsform weist das Kommunikationsnetzwerk eine Master-Slave-Struktur auf. Hierbei sind die vorgenannten Teilnehmer des Kommunikationsnetzwerks als Slaves konfiguriert, und weist das Kommunikationsnetzwerk einen weiteren aktiven und als Master konfigurierten Teilnehmer auf. Der Master-Teilnehmer und die Slave-Teilnehmer können über eine Übertragungsstrecke wie zum Beispiel eine Datenleitung verbunden sein. Der Master-Teilnehmer besitzt eine Netzzugriffsberechtigung und kann Telegramme auf die Übertragungsstrecke ausgeben und über die Übertragungsstrecke empfangen. Die Slave-Teilnehmer besitzen im Unterschied hierzu keine eigene Netzzugriffsberechtigung auf das Kommunikationsnetzwerk, und dürfen daher keine eigenständigen Telegramme auf das Kommunikationsnetzwerk ausgeben, sondern nur einen Datenaustausch mit den auf der Übertragungsstrecke umlaufenden Telegrammen ausführen.

In einer weiteren Ausführungsform wird als Prüfwert ein CRC-Prüfwert verwendet. Hierbei handelt es sich um einen nach dem CRC-Verfahren (Cyclic Redundancy Check, zyklische Redundanzprüfung) aus vorhergehenden Datenabschnitten eines Telegramms berechneten Prüfwert. Das CRC-Verfahren beruht auf einer Polynomdivision unter Verwendung eines Generatorpolynoms.

Gemäß einem weiteren Aspekt der Erfindung wird ein Kommunikationsnetzwerk vorgeschlagen. Das Kommunikationsnetzwerk kann zum Durchführen des vorgenannten Verfahrens bzw. eines Verfahrens gemäß einer oder mehrerer der vorgenannten Ausführungsformen ausgebildet sein. Das Kommunikationsnetzwerk umfasst mehrere Teilnehmer. Ein Datenaustausch in dem Kommunikationsnetzwerk zwischen den Teilnehmern erfolgt in Form von Telegrammen, welche mehrere Datenabschnitte aufweisen. Die Teilnehmer sind ausgebildet, einen Endbereich der Telegramme als Prüfwert zum Überprüfen einer Fehlerfreiheit von vorhergehenden Datenabschnitten der Telegramme zu interpretieren. Die Teilnehmer sind ferner ausgebildet, die Telegramme im Durchlauf zu verarbeiten, so dass die Telegramme von den Teilnehmern empfangen und während des Empfangens an einen jeweils nächsten Teilnehmer weitergesendet werden. Die Teilnehmer sind des Weiteren ausgebildet, das Senden eines Telegramms an einen nächsten Teilnehmer mit einem kennzeichnenden Datenabschnitt des Telegramms an dessen Ende durchzuführen, sofern beim Empfangen des Telegramms ein Fehler des Telegramms festgestellt wird, so dass das an den nächsten Teilnehmer gesendete Telegramm einen Endbereich aufweist, welcher einen ungültigen Prüfwert wiedergibt. Mit Hilfe des kennzeichnenden Datenabschnitts, welcher Bestandteil des als Prüfwert interpretierten Endbereichs des Telegramms ist, wird das Telegramm für den nächsten Teilnehmer derart gekennzeichnet, dass das Telegramm nicht als Erstfehler sondern als Folgefehler zu berücksichtigen ist.

Für das vorgenannte Kommunikationsnetzwerk können dieselben Merkmale und Ausführungsformen zur Anwendung kommen und können dieselben Vorteile in Betracht kommen, wie sie oben mit Bezug auf das Verfahren erläutert wurden.

Beispielsweise können die Teilnehmer ausgebildet sein, den kennzeichnenden Datenabschnitt aus einer Gruppe umfassend mehrere vorgegebene Datenabschnitte auszuwählen. Des Weiteren können die Teilnehmer ausgebildet sein, den kennzeichnenden Datenabschnitt durch Durchführen einer vorgegebenen Berechnung unter Verwendung wenigstens eines zuvor gesendeten Datenabschnitts festzulegen. Auch können die Teilnehmer wenigstens einen Fehlerzähler aufweisen. Hierunter fallen ein Erstfehler-Fehlerzäher, ein Folgefehler-Fehlerzähler, sowie mehrere und sich auf unterschiedliche Fehlerarten beziehende Fehlerzähler. Die Teilnehmer können ferner ausgebildet sein, in Abhängigkeit einer Fehlerart eines festgestellten Fehlers das Senden des Telegramms an einen nächsten Teilnehmer durch Senden des kennzeichnenden Datenabschnitts vorzeitig zu beenden. Des Weiteren kann das Kommunikationsnetzwerk eine Master-Slave-Struktur aufweisen.

Auch kann das Kommunikationsnetzwerk ein Ethernet-basiertes Feldbussystem, zum Beispiel ein EtherCAT-Feldbussystem sein. Als Prüfwert kann ein CRC-Prüfwert zur Anwendung kommen.

Gemäß einem weiteren Aspekt der Erfindung wird ein Teilnehmer für ein Kommunikationsnetzwerk vorgeschlagen. Hierbei kann es sich um das vorgenannte Kommunikationsnetzwerk handeln. Ein Datenaustausch in dem Kommunikationsnetzwerk erfolgt in Form von Telegrammen, welche mehrere Datenabschnitte aufweisen. Der Teilnehmer ist ausgebildet, einen Endbereich der Telegramme als Prüfwert zum Überprüfen einer Fehlerfreiheit von vorhergehenden Datenabschnitten der Telegramme zu interpretieren. Der Teilnehmer ist ferner ausgebildet, die Telegramme im Durchlauf zu verarbeiten, so dass die Telegramme von dem Teilnehmer empfangen und während des Empfangens an einen jeweils nächsten Teilnehmer weitergesendet werden. Der Teilnehmer ist des Weiteren ausgebildet, das Senden eines Telegramms an einen nächsten Teilnehmer mit einem kennzeichnenden Datenabschnitt des Telegramms an dessen Ende durchzuführen, sofern beim Empfangen des Telegramms ein Fehler des Telegramms festgestellt wird, so dass das an den nächsten Teilnehmer gesendete Telegramm einen Endbereich aufweist, welcher einen ungültigen Prüfwert wiedergibt. Mit Hilfe des kennzeichnenden Datenabschnitts, welcher Bestandteil des als Prüfwert interpretierten Endbereichs des Telegramms ist, wird das Telegramm für den nächsten Teilnehmer derart gekennzeichnet, dass das Telegramm nicht als Erstfehler sondern als Folgefehler zu berücksichtigen ist.

In entsprechender Weise können für den vorgenannten Teilnehmer dieselben Merkmale und Ausführungsformen denkbar sein und können dieselben Vorteile in Betracht kommen, wie sie oben erläutert wurden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 ein Kommunikationsnetzwerk mit einer Master-Slave-Struktur;
Figur 2 einen Slave-Teilnehmer; und
Figuren 3 bis 12 Diagramme, welche ein Verarbeiten von Telegrammen im Durchlauf durch Slave-Teilnehmer im Falle von aufgetretenen Fehlern veranschaulichen.

Auf der Grundlage der folgenden schematischen Figuren werden Ausführungsformen eines Verfahrens zum Betreiben eines Kommunikationsnetzwerks sowie Ausführungsformen eines Kommunikationsnetzwerks beschrieben. Das Verfahren und das Kommunikationsnetzwerk sind dahingehend ausgestaltet, dass beim Empfangen eines fehlerhaften Telegramms durch einen Kommunikationsteilnehmer das Telegramm in gekennzeichneter Form an einen nächsten Teilnehmer weitergesendet wird, und dieser anhand der Kennzeichnung erkennen kann, dass ein Fehler in dem Telegramm als Folgefehler zu betrachten ist.

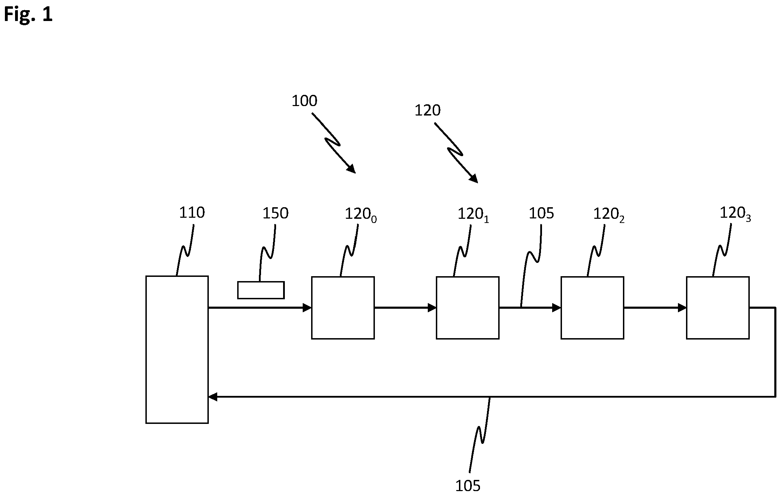

Zur weiteren Veranschaulichung zeigt Figur 1 eine schematische Darstellung eines Kommunikationsnetzwerks 100, bei welchem das Verfahren zur Anwendung kommen kann. Das Kommunikationsnetzwerk 100 besitzt eine Master-Slave-Struktur, und weist einen Master-Teilnehmer 110 und mehrere Slave-Teilnehmer 120 auf. Der Master-Teilnehmer 110 und die Slave-Teilnehmer 120 sind über eine Übertragungsstrecke 105 miteinander verbunden. Über die Übertragungsstrecke 105, welche in Form einer Datenleitung verwirklicht ist, kann ein Datenaustausch in dem Kommunikationsnetzwerk 100 in Form von Telegrammen 150 erfolgen.

Das in Figur 1 beispielhaft gezeigte Kommunikationsnetzwerk 100 weist vorliegend vier Slave-Teilnehmer 120 auf, welche zur Unterscheidung ferner mit den tiefgestellten Indices 0, 1, 2, 3 versehen sind. Bei den Slave-Teilnehmern 120 kann es sich zum Beispiel um Sensoren, Aktoren, Darstellungseinrichtungen, Bedieneinrichtungen, Motoren, usw. handeln. Abweichend von der beispielhaften Darstellung in Figur 1 kann das Kommunikationsnetzwerk 100 auch eine andere bzw. größere Anzahl an Slave-Teilnehmern 120 umfassen.

Der Master-Teilnehmer 110 stellt den aktiven Teilnehmer des Kommunikationsnetzwerks 100 dar, welcher den Datenverkehr bestimmen kann. Hierzu besitzt allein der Master-Teilnehmer 110 eine Zugriffsberechtigung auf das Kommunikationsnetzwerk 100, und kann Telegramme 150 auf die Übertragungsstrecke 105 ausgeben und über die Übertragungsstrecke 105 empfangen.

Im Unterschied hierzu besitzen die Slave-Teilnehmer 120 keine eigene Netzzugriffsberechtigung, und dürfen daher keine eigenständigen Telegramme 150 auf die Übertragungsstrecke 105 ausgeben. Stattdessen können die Slave-Teilnehmer 120 lediglich einen Datenaustausch mit den auf der Übertragungsstrecke 105 umlaufenden Telegrammen 150 ausführen.

Bei dem in Figur 1 gezeigten Kommunikationsnetzwerk 100 sind die Slave-Teilnehmer 120 und der Master-Teilnehmer 110 in Form einer Kette bzw. eines Rings zusammengeschlossen. Im Folgenden werden die Slave-Teilnehmer 120 entsprechend ihrer Reihenfolge in Übertragungsrichtung nach dem Master-Teilnehmer 110 auch als erster Slave-Teilnehmer 120₀, als zweiter Slave-Teilnehmer 120₁, als dritter Slave-Teilnehmer 120₂ und als letzter Slave-Teilnehmer 120₃ bezeichnet.

Die Datenübertragung in Form der Telegramme 150 erfolgt in einer Richtung ausgehend von dem Master-Teilnehmer 110 zum ersten Slave-Teilnehmer 120₀, von dort jeweils von einem zum nächsten Slave-Teilnehmer 120 bis zu dem letzten Slave-Teilnehmer 120₃, und von diesem wieder zurück zu dem Master-Teilnehmer 110. In den einzelnen Slave-Teilnehmern 120 werden die Telegramme 150 im Durchlauf verarbeitet. Hierbei werden die Telegramme 150 von den Teilnehmern 120 empfangen und während des Empfangens mit einer Durchlaufverzögerung an einen jeweils nächsten Teilnehmer 120, bzw. im Falle des letzten Slave-Teilnehmers 120₃ an den Master-Teilnehmer 110, weitergesendet. Bei der Verarbeitung der Telegramme 150 im Durchlauf können die Telegramme 150 von den Slave-Teilnehmern 120 ohne Änderung des Dateninhalts oder mit geändertem Dateninhalt weitergesendet werden. Des Weiteren ist es möglich, dass die Telegramme 150, abweichend von der Darstellung in Figur 1, vom letzten Slave-Teilnehmer 120₃ durch die anderen Slave-Teilnehmer 120 (in der Reihenfolge dritter Slave-Teilnehmer 120₂, zweiter Slave-Teilnehmer 120₁, erster Slave-Teilnehmer 120₀) ohne weitere Verarbeitung an den Master-Teilnehmer 110 zurückgesendet werden.

Das Kommunikationsnetzwerk von Figur 1 kann ein Ethernet-basiertes Feldbussystem sein, in welchem der Datenaustausch über die Telegramme 150 gemäß dem Ethernet-Standard erfolgt. Hierbei kann es sich um ein System mit einer Übertragungsrate von 1 Gbit/s handeln. In diesem Zusammenhang kann des Weiteren eine Ausgestaltung des Netzwerks 100 in Form eines EtherCAT-Feldbussystems in Betracht kommen. Mit Bezug auf derartige Ausgestaltungen werden die Daten als kodierte Daten bzw. Symbole physikalisch auf der Übertragungsstrecke 105 übertragen. Bei einer Übertragungsrate von 1 Gbit/s liegt eine 8B/10B-Kodierung vor, d.h. dass 8-Bit-Dateneinheiten kodiert als 10-Bit-Dateneinheiten übertragen werden. Im Rahmen der Datenübertragung erfolgt insofern ein Kodieren und ein Dekodieren beim Senden und Empfangen der Telegramme 150.

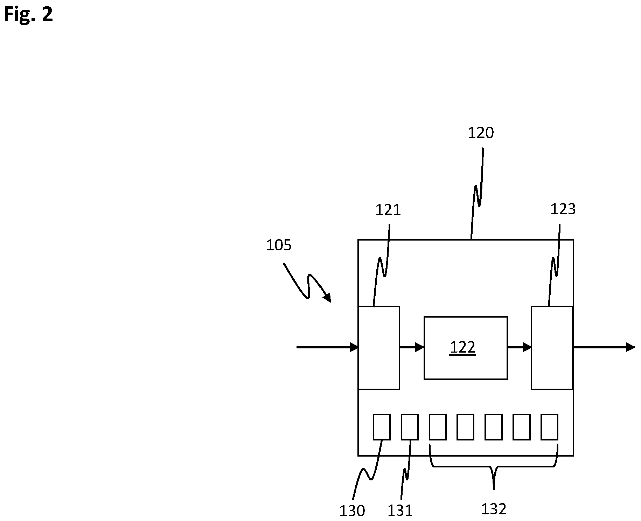

Die Slave-Teilnehmer 120 weisen zu diesem Zweck, wie in Figur 2 anhand eines Slave-Teilnehmers 120 dargestellt ist, eine Empfangseinrichtung 121 und eine Sendeeinrichtung 123 auf, wobei mit Hilfe der Empfangseinrichtung 121 die Telegramme 150 empfangen und dekodiert, und mit Hilfe der Sendeeinrichtung 123 die Telegramme 150 kodiert und gesendet werden. Ein weiterer Bestandteil der Slave-Teilnehmer 120 ist eine sich zwischen Empfangs- und Sendeeinrichtung 121, 123 befindende Verarbeitungseinrichtung 122, mit deren Hilfe die Telegramme 150 verarbeitet und der Dateninhalt der Telegramme 150 gegebenenfalls verändert werden kann. Die Slave-Teilnehmer 120 können ferner weitere nicht gezeigte Komponenten wie zum Beispiel einen Datenspeicher umfassen. Der Master-Teilnehmer 110, durch welchen wie oben angegeben das Ausgeben der Telegramme 150 auf die Übertragungsstrecke 105 gesteuert und angestoßen wird, weist ebenfalls eine Sendeeinrichtung zum Kodieren und Senden der Telegramme 150 und eine Empfangseinrichtung zum Empfangen und Dekodieren der Telegramme 150, sowie weitere Komponenten wie zum Beispiel eine zentrale Steuereinheit und einen Speicher auf (nicht dargestellt).

Bei der Datenübertragung in dem Kommunikationsnetzwerk 100 kann es zu Störungen kommen. Auf diese Weise kann ein von einem Slave-Teilnehmer 120 empfangenes Telegramm 150 einen Fehler aufweisen. In einem solchen Fall ist vorgesehen, dass der Slave-Teilnehmer 120 das Weitersenden des fehlerhaften Telegramms 150 mit einer Kennzeichnung durchführt, wodurch ein Fehler in dem Telegramm 150 von einem nächsten Slave-Teilnehmer 120 als Folgefehler berücksichtigt werden kann. Auf diese Weise besteht die Möglichkeit, die Fehlerquelle, also bei welchem der Slave-Teilnehmer 120 der Fehlerfall zuerst aufgetreten bzw. entstanden ist, zu lokalisieren. Die Slave-Teilnehmer 120 weisen zu diesem Zweck, wie ebenfalls in Figur 2 gezeigt ist, einen Erstfehler-Fehlerzähler 130 und einen Folgefehler-Fehlerzähler 131 auf. Sofern ein Slave-Teilnehmer 120 ein fehlerhaftes Telegramm 150 empfängt und dieses nicht gekennzeichnet ist, wird der Erstfehler-Fehlerzähler 130 inkrementiert. Für den Fall des Empfangens eines fehlerhaften Telegramms 150, welches gekennzeichnet ist, wird der Folgefehler-Fehlerzähler 131 inkrementiert. Durch Auswerten der Fehlerzähler 130, 131 der Slave-Teilnehmer 120 ist es infolgedessen möglich, die Fehlerquelle oder auch mehrere Fehlerquellen zu lokalisieren.

In Figur 2 ist angedeutet, dass die Slave-Teilnehmer 120 weitere Fehlerzähler 132 aufweisen können. Hierdurch können zusätzlich unterschiedliche Fehlerarten berücksichtigt werden. Die Fehlerzähler 132 sind dabei jeweils einer Fehlerart zugeordnet. In diesem Zusammenhang ist vorgesehen, dass die Slave-Teilnehmer 120 beim Feststellen eines Erstfehlers eines empfangenden Telegramms 150 ferner die vorliegende Fehlerart ermitteln, und hierauf basierend der zugehörige Fehlerzähler 132 inkrementiert wird. Auf diese Weise können zum Beispiel statistische Aussagen über in dem Kommunikationsnetzwerk 100 aufgetretene unterschiedliche Fehler getroffen werden.

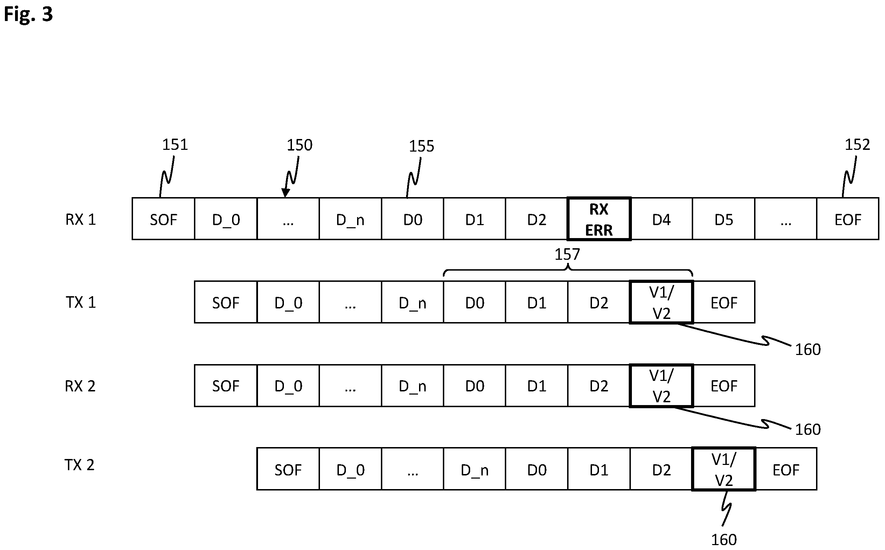

Vorgenannte Schritte wie das Ermitteln von Fehlern und Kennzeichnen eines Telegramms 150 als Folgefehler sowie weitere Schritte, wie es im Folgenden anhand der Figuren 3 bis 12 näher erläutert wird, können mit Hilfe der Verarbeitungseinrichtung 122 der Slave-Teilnehmer 120 durchgeführt werden. In entsprechender Weise kann die Verarbeitungseinrichtung 122 das Inkrementieren der Fehlerzähler 130, 131, 132 initiieren. Das Auswerten der Fehlerzähler 130, 131, 132 kann mit Hilfe des Master-Teilnehmers 110 erfolgen, welchem die Fehlerzähler-Informationen mit Hilfe eines oder mehrerer Telegramme 150 übermittelt werden können.

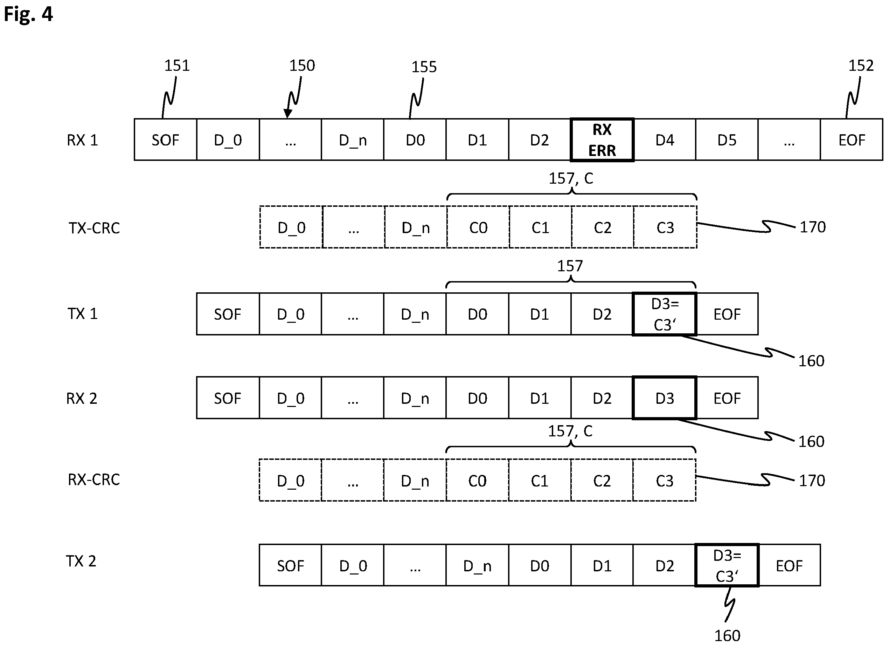

Die Figuren 3 bis 12 zeigen Diagramme, welche ein Verarbeiten von Telegrammen 150 im Durchlauf durch Slave-Teilnehmer 120 des Kommunikationsnetzwerks 100 von Figur 1 für unterschiedliche Fehler veranschaulichen. Der Fehler tritt jeweils zuerst beim Empfangen eines Telegramms 150 durch einen Slave-Teilnehmer 120 auf, welcher das Telegramm 150 an einen nächsten Slave-Teilnehmer 120 weitersendet. Für die folgende Beschreibung werden der zweite Slave-Teilnehmer 120₁, bei welchem der Fehler zuerst auftritt, und der dritte Slave-Teilnehmer 120₂ als nächster Teilnehmer betrachtet. In den Diagrammen ist diesbezüglich mit RX 1 und TX 1 ein erstes Empfangen und ein erstes Senden des Telegramms 150 durch den zweiten Slave-Teilnehmer 120₁, und mit RX 2 und TX 2 ein zweites Empfangen und ein zweites Senden des Telegramms 150 durch den nachfolgenden dritten Slave-Teilnehmer 120₂ bezeichnet. In einem Teil der Diagramme (Figuren 4, 6, 8, 10 und 12) ist ferner mit TX-CRC ein erstes Berechnen eines (fiktiven) gültigen Prüfwerts von Daten des durch den zweiten Slave-Teilnehmer 120₁ gesendeten Telegramms 150 und mit RX-CRC ein zweites Berechnen eines (fiktiven) gültigen Prüfwerts von Daten des durch den dritten Slave-Teilnehmer 120₂ empfangenen Telegramms 150 dargestellt.

Die Telegramme 150, wie sie in den Figuren 3 bis 12 dargestellt sind, weisen eine Mehrzahl von Datenabschnitten 155 auf. Jeder Datenabschnitt 155 umfasst dabei dieselbe Datenmenge, welche im Falle von Ethernet ein Byte bzw. acht Bits beträgt. Zur Unterscheidung sind die Datenabschnitte 155 zusätzlich mit Bezeichnungen wie D_0, D_n, D0, D1 usw. versehen. Abhängig von der jeweiligen Bezeichnung werden die Datenabschnitte 155 auch als nullter Datenabschnitt D0, erster Datenabschnitt D1, zweiter Datenabschnitt D2, dritter Datenabschnitt D3, vierter Datenabschnitt D4 und fünfter Datenabschnitt D5 bezeichnet. Vor den im letzten Satz genannten nullten bis fünften Datenabschnitten D0, D1, D2, D3, D4, D5 in dem Telegramm 150 befinden sich vorhergehende Datenabschnitte D_0 bis D_n, welche auch als weiterer nullter Datenabschnitt D_0 bis weiterer n-ter Datenabschnitt D_n bezeichnet werden.

In diesem Zusammenhang wird darauf hingewiesen, dass sich die Dateninhalte der mit den gleichen Bezeichnungen gekennzeichneten Datenabschnitte 155 voneinander unterscheiden können, da die Slave-Teilnehmer 120 die Telegramme 150, wie oben angegeben, bearbeiten können. Auf diese Weise können zum Beispiel zwischen den beim ersten Empfangen RX 1 und ersten Senden TX 1 (sowie auch beim zweiten Empfangen RX 2 und zweiten Senden TX 2) dargestellten Telegrammen 150 unterschiedliche Daten bei den mit den gleichen Bezeichnungen versehenen Datenabschnitten 155 vorliegen.

Das oben erwähnte Kennzeichnen eines Telegramms 150 wird mit Hilfe eines kennzeichnenden Datenabschnitts 160 des Telegramms 150 an dessen Ende durchgeführt. Der kennzeichnende Datenabschnitt 160 besitzt dieselbe Datenmenge wie die übrigen Datenabschnitte 155, also im Falle von Ethernet ein Byte.

Die Telegramme 150 weisen ferner am Anfang ein SOF-Feld 151 (Start of Frame) und am Ende ein EOF-Feld 152 (End of Frame) auf, mit deren Hilfe einem Slave-Teilnehmer 120 der Anfang sowie das Ende eines Telegramms 150 beim Empfangen desselben angezeigt werden können. Bei den beiden Feldern 151, 152 kann es sich um spezifische gesendete Symbole oder Signale handeln. Die eigentlichen Nutzdaten in Form der Datenabschnitte 155, 160 befinden sich zwischen den beiden Feldern 151, 152.

Mit Bezug auf die Figuren 3 bis 12 wird ergänzend darauf hingewiesen, dass die Verarbeitung der Telegramme 150 durch die Slave-Teilnehmer 120 jeweils von links nach rechts, also ab Empfang des SOF-Felds 151 bis zu dem EOF-Feld 152, erfolgt. Ferner ist in den Figuren 3 bis 12 die bei der Verarbeitung der Telegramme 150 im Durchlauf vorliegende Durchlaufverzögerung angedeutet, welche vorliegend der Länge eines Datenabschnitts 155 bzw. einem Byte entspricht. Somit wird das von dem zweiten Slave-Teilnehmer 120₁ empfangene Telegramm 150 um einen Datenabschnitt 155 bzw. ein Byte versetzt an den dritten Slave-Teilnehmer 120₂ weitergesendet.

Die Slave-Teilnehmer 120 sind ferner dahingehend ausgebildet, dass ein sich vor dem EOF-Feld 152 befindender Endbereich 157 der Telegramme 150 als Prüfwert interpretiert wird, anhand dessen eine Fehlerfreiheit von vorhergehenden, d.h. sich vor dem Endbereich 157 befindenden Datenabschnitten 155 der Telegramme 150 überprüft werden kann. Der Endbereich 157 umfasst vorliegend vier Datenabschnitte 155 bzw. vier Bytes. Im Falle einer Kennzeichnung ist der kennzeichnende Datenabschnitt 160 Bestandteil des Endbereichs 157 und befindet sich an dessen Ende, so dass der Endbereich drei Datenabschnitte 155 und danach den kennzeichnenden Datenabschnitt 160 umfasst.

Anhand des durch den Endbereich 157 wiedergegebenen Prüfwerts kann eine Fehlerfreiheit von vorhergehenden, d.h. sich vor dem Endbereich 157 befindenden Datenabschnitten 155 der Telegramme 150 überprüft werden. Der Prüfwert kann gemäß eines vorgegebenen Berechnungsverfahrens aus den vorhergehenden Datenabschnitten 155 berechnet werden, und ist dadurch in einer vorbestimmten Weise mit diesen Datenabschnitten 155 verknüpft. Der Prüfwert kann ein CRC-Prüfwert sein, welcher gemäß des CRC-Verfahrens (Cyclic Redundancy Check, zyklische Redundanzprüfung) aus den vorhergehenden Datenabschnitten 155 berechnet werden kann. Sofern kein Fehlerfall vorliegt und ein Telegramm 150 durch einen Slave-Teilnehmer 120 korrekt empfangen wird, liegt ein gültiger Prüfwert vor, welcher eine Fehlerfreiheit der sich vor dem Endbereich 157 befindenden Datenabschnitte 155 anzeigt.

Wie oben angedeutet wurde, kann es bei der Datenübertragung in dem Kommunikationsnetzwerk 100 aufgrund von Störungen zu unterschiedlichen Fehlern kommen. Das Diagramm von Figur 3 veranschaulicht ein Vorliegen eines Symbolfehlers. Bei diesem Fehlerfall enthält ein empfangenes Telegramm 150 ein nicht vergebenes und damit ungültiges Symbol. In Figur 3 ist als Beispiel veranschaulicht, dass das von dem zweiten Slave-Teilnehmer 120₁ empfangene Telegramm 150 nach dem zweiten Datenabschnitt D2 nicht einen korrekten dritten Datenabschnitt D3, sondern stattdessen einen fehlerhaften Datenabschnitt RX ERR aufweist. In diesem Fall bzw. nach einem Feststellen des Symbolfehlers durch den zweiten Slave-Teilnehmer 120₁ wird das versetzte Weitersenden des Telegramms 150 an den nächsten bzw. dritten Slave-Teilnehmer 120₂ vorzeitig beendet, indem der zweite Slave-Teilnehmer 120₁ nach dem zweiten Datenabschnitt D2 einen kennzeichnenden Datenabschnitt 160 sendet und anschließend das Senden des Telegramms 150 durch Senden des EOF-Felds 152 abschließt. Darüber hinaus erfolgt ein Inkrementieren des Erstfehler-Fehlerzählers 130 des zweiten Slave-Teilnehmers 120₁. Sofern vorhanden, kann auch ein Inkrementieren eines sich auf einen Symbolfehler beziehenden weiteren Fehlerzählers 132 des zweiten Slave-Teilnehmers 120₁ stattfinden (vgl. Figur 2).

Bei der in Figur 3 gezeigten Verfahrensvariante ist bezüglich des kennzeichnenden Datenabschnitts 160 vorgesehen, diesen Datenabschnitt 160 aus einem ersten vorgegebenen Datenabschnitt V1 und einem zweiten vorgegebenen Datenabschnitt V2 auszuwählen. Die betreffenden ersten und zweiten vorgegebenen Datenabschnitte V1, V2 sind hierbei in sämtlichen Slave-Teilnehmern 120 des Kommunikationsnetzwerk 100 hinterlegt, woraufhin die Slave-Teilnehmer 120 die Kennzeichnung erkennen können. Bei den vorgegebenen Datenabschnitten V1, V2 kann es sich um invertierte Datenabschnitte (zum Beispiel mit den Werten 0xA4 und 0x5B) handeln. Das Auswählen von einem der beiden vorgegebenen Datenabschnitte V1, V2 kann vorgesehen sein, um sicherzustellen, dass das an den nächsten bzw. dritten Slave-Teilnehmer 120₂ gesendete Telegramm 150 einen Endbereich 157 aufweist, welcher keinen gültigen sondern stattdessen einen ungültigen Prüfwert wiedergibt.

Das von dem zweiten Slave-Teilnehmer 120₁ an den nächsten bzw. dritten Slave-Teilnehmer 120₂ gesendete und von diesem empfangene Telegramm 150 weist vorliegend einen den nullten, ersten und zweiten Datenabschnitt D0, D1, D2 und den kennzeichnenden Datenabschnitt 160 umfassenden Endbereich 157 auf (vgl. das erste Senden TX 1 und das zweite Empfangen RX 2). Der durch den Endbereich 157 wiedergegebene Prüfwert bezieht sich auf die vorhergehenden Datenabschnitte, d.h. den weiteren nullten Datenabschnitt D_0 bis weiteren n-ten Datenabschnitt D_n. Um sicherzustellen, dass der Endbereich 157 keinen gültigen Prüfwert vermittelt, kann der zweite Slave-Teilnehmer 120₁ wie folgt vorgehen.

Es ist zum Beispiel möglich, dass der zweite Slave-Teilnehmer 120₁ mittels Durchführen einer entsprechenden Berechnung überprüft, ob bei einem Senden des Telegramms 150 mit dem ersten vorgegebenen Datenabschnitt V1 ein durch den Endbereich 157 wiedergegebener gültiger Prüfwert für die vorhergehenden weiteren nullten bis n-ten Datenabschnitte D_0 bis D_n vorliegen würde. Sofern dies nicht der Fall ist, sendet der zweite Slave-Teilnehmer 120₁ im Anschluss an den zweiten Datenabschnitt D2 den ersten vorgegebenen Datenabschnitt V1. Sofern der zweite Slave-Teilnehmer 120₁ hingegen feststellt, dass durch das Senden des Telegramms 150 mit dem ersten vorgegebenen Datenabschnitt V1 der Endbereich 157 einen gültigen Prüfwert wiedergeben würde, wird der zweite vorgegebene Datenabschnitt V2 durch den zweiten Slave-Teilnehmer 120₁ ausgewählt und nach dem zweiten Datenabschnitt D2 gesendet.

Das an den nächsten bzw. dritten Slave-Teilnehmer 120₂ übermittelte Telegramm 150 besitzt auf diese Weise einen einen ungültigen Prüfwert wiedergebenden Endbereich 157 umfassend den nullten, ersten und zweiten Datenabschnitt D0, D1, D2 und den kennzeichnenden Datenabschnitt 160, so dass das Telegramm 150 von dem dritten Slave-Teilnehmer 120₂ als fehlerhaft erkannt werden kann. Es ist ferner möglich, dass das durch das vorzeitige Beenden des Sendens verkürzte Telegramm 150 aufgrund der kürzeren Telegrammlänge von dem dritten Slave-Teilnehmer 120₂ zusätzlich als fehlerhaft erkannt wird. Darüber hinaus ist das Telegramm 150 durch den kennzeichnenden Datenabschnitt 160, also den ersten vorgegebenen Datenabschnitt V1 oder den zweiten vorgegebenen Datenabschnitt V2, in erkennbarer Weise für den dritten Slave-Teilnehmer 120₂ gekennzeichnet, so dass der Fehler in dem Telegramm 150 von diesem als Folgefehler berücksichtigt wird. Zu diesem Zweck erfolgt ein Inkrementieren des Folgefehler-Fehlerzählers 131 des dritten Slave-Teilnehmers 120₂ (vgl. Figur 2).

Eine weitere Variante mit Bezug auf das Auswählen besteht darin, dass der zweite Slave-Teilnehmer 120₁ mittels Durchführen einer entsprechenden Berechnung überprüft, ob bei einem Senden des Telegramms 150 mit jedem von dem vorgegebenen ersten bzw. zweiten Datenabschnitt V1 bzw. V2 jeweils ein durch den Endbereich 157 wiedergegebener ungültiger Prüfwert für die vorhergehenden Datenabschnitte, d.h. die weiteren nullten bis n-ten Datenabschnitte D_0 bis D_n, vorliegen würde. Im Rahmen der Überprüfung kann der zweite Slave-Teilnehmer 120₁ ferner einen gültigen Prüfwert für die gesendeten weiteren nullten bis n-ten Datenabschnitte D_0 bis D_n berechnen. Sofern festgestellt wird, dass bei einem Senden mit einem von den beiden vorgegebenen Datenabschnitten V1, V2 der gültige Prüfwert durch den Endbereich 157 übermittelt würde, wird der andere von den beiden vorgegebenen Datenabschnitten V1, V2 durch den zweiten Slave-Teilnehmer 120₁ ausgewählt und nach dem zweiten Datenabschnitt D2 gesendet.

Sofern jedoch festgestellt wird, dass bei einem Senden von jedem der beiden vorgegebenen Datenabschnitte V1, V2 jeweils ein ungültiger Prüfwert durch den Endbereich 157 übermittelt würde, wird derjenige von den vorgegebenen Datenabschnitten V1, V2 durch den zweiten Slave-Teilnehmer 120₁ ausgewählt und gesendet, mit dessen Verwendung ein größerer Unterschied zu dem gültigen Prüfwert für die zuvor gesendeten weiteren nullten bis n-ten Datenabschnitte D_0 bis D_n erzielt werden kann. Hierdurch kann ebenfalls erreicht werden, dass das an den dritten Slave-Teilnehmer 120₂ gesendete Telegramm einen einen ungültigen Prüfwert wiedergebenden Endbereich 157 aufweist. Zudem kann sich der Prüfwert möglichst groß von dem gültigen Prüfwert unterscheiden. Auf diese Weise kann vermieden werden, dass bei einem Senden des gekennzeichneten Telegramms 150 an den dritten Slave-Teilnehmer 120₂ und einem hierbei gegebenenfalls auftretenden Fehlerfall das Telegramm 150 von dem dritten Teilnehmer 120₂ mit einem Endbereich 157 empfangen wird, welcher ein Vorliegen eines gültigen Prüfwerts vermittelt.

In Figur 3 ist weiter dargestellt, dass der dritte Slave-Teilnehmer 120₂ das fehlerhafte Telegramm 150 ebenfalls in gekennzeichneter Form mit einem kennzeichnenden Datenabschnitt 160 an dessen Ende an den nächsten Slave-Teilnehmer 120 (vorliegend der letzte Slave-Teilnehmer 120₃, vgl. Figur 1) weitersendet (vgl. zweites Senden TX 2). Dabei führt der dritte Slave-Teilnehmer 120₂ dieselben Schritte durch wie der zweite Slave-Teilnehmer 120₁. Der dritte Slave-Teilnehmer 120₂ stellt zwar keinen Symbolfehler, sondern stattdessen einen Prüfwertfehler sowie gegebenenfalls zusätzlich einen Fehler in Form eines zu kurzen Telegramms 150 fest, wie es weiter unten noch beschrieben wird. Das Kennzeichnen des an den letzten Slave-Teilnehmer 120₃ weitergesendeten Telegramms 150 erfolgt jedoch entsprechend der obigen Beschreibung, indem der kennzeichnende Datenabschnitt 160 aus einem von dem vorgegebenen ersten oder zweiten Datenabschnitt V1, V2 ausgewählt und nach dem zweiten Datenabschnitt D2 gesendet wird.

Das Diagramm von Figur 4 zeigt eine weitere Verfahrensvariante, welche bei Vorliegen eines Symbolfehlers durchgeführt werden kann. Auch hierbei wird durch den zweiten Slave-Teilnehmer 120₁, nach Erkennen des empfangenen fehlerhaften Datenabschnitts RX ERR, das Weitersenden des Telegramms 150 an den nächsten bzw. dritten Teilnehmer 120₂ vorzeitig beendet, indem der zweite Slave-Teilnehmer 120₁ nach dem Senden des zweiten Datenabschnitts D2 einen kennzeichnenden Datenabschnitt 160 sendet und anschließend das Senden des Telegramms 150 durch Senden des EOF-Felds 152 abschließt (vgl. erstes Senden TX 1). In entsprechender Weise erfolgt ein Inkrementieren des Erstfehler-Fehlerzählers 130 sowie gegebenenfalls eines weiteren und sich auf einen Symbolfehler beziehenden Fehlerzählers 132 des zweiten Slave-Teilnehmers 120₁. Bezüglich des kennzeichnenden Datenabschnitts 160 ist vorgesehen, diesen durch Durchführen einer vorgegebenen Berechnung festzulegen. In diesem Zusammenhang sind sämtliche Slave-Teilnehmer 120 des Kommunikationsnetzwerks 100 zum Durchführen der im Folgenden erläuterten vorgegebenen Berechnung ausgebildet, woraufhin die Slave-Teilnehmer 120 die Kennzeichnung erkennen können.

Wie in Figur 4 anhand der eine erste Berechnung TX-CRC wiedergebenden Zeile deutlich wird, berechnet der zweite Slave-Teilnehmer 120₁ einen fiktiven gültigen Prüfwert C, vorliegend umfassend den nullten Teilwert C0, den ersten Teilwert C1, den zweiten Teilwert C2 und den dritten Teilwert C3 für zuvor an den nächsten bzw. dritten Slave-Teilnehmer 120₂ gesendete weitere nullte bis n-te Datenabschnitte D_0 bis D_n. Bei diesem Vorgang legt der zweite Slave-Teilnehmer 120₁ ein Senden eines fiktiven korrekten Telegramms 170 zugrunde, bei welchem ein nach den weiteren nullten bis n-ten Datenabschnitten D_0 bis D_n vorliegender Endbereich 157 den gültigen Prüfwert C wiedergeben würde, und somit dem dritten Slave-Teilnehmer 120₂ hinsichtlich des Prüfwerts eine Fehlerfreiheit angezeigt würde. Zum Kennzeichnen des an den nächsten bzw. dritten Slave-Teilnehmer 120₂ tatsächlich gesendeten Telegramms 150 ermittelt der zweite Slave-Teilnehmer 120₁ einen dritten Alternativwert C3' für den letzten gültigen dritten Teilwert C3 des fiktiven gültigen Prüfwerts C. Dies erfolgt durch Anwenden eines vorgegebenen Berechnungsalgorithmus auf den dritten Teilwert C3. Möglich ist zum Beispiel ein Invertieren des dritten Teilwerts C3. Alternativ kann auch ein anderer Berechnungsalgorithmus zur Anwendung kommen. Der derart ermittelte dritte Alternativwert C3' wird als kennzeichnender Datenabschnitt 160 festgelegt. Des Weiteren wird der kennzeichnende Datenabschnitt 160 bzw. der dritte Datenabschnitt D3, welcher hier dem dritten Alternativwert C3' entspricht, im Anschluss an den zweiten Datenabschnitt D2 an den dritten Slave-Teilnehmer 120₂ gesendet.

Das an den nächsten bzw. dritten Slave-Teilnehmer 120₂ gesendete Telegramm 150 besitzt einen einen ungültigen Prüfwert wiedergebenden Endbereich 157 umfassend den nullten Datenabschnitt D0, den ersten Datenabschnitt D1, den zweiten Datenabschnitt D2 und den kennzeichnenden Datenabschnitt 160, so dass das Telegramm 150 von dem dritten Slave-Teilnehmer 120₂ als fehlerhaft erkannt werden kann. Es ist ferner möglich, dass das durch das vorzeitige Beenden des Sendens verkürzte Telegramm 150 aufgrund der kürzeren Telegrammlänge von dem dritten Slave-Teilnehmer 120₂ zusätzlich als fehlerhaft erkannt wird. Darüber hinaus ist das Telegramm 150 für den dritten Slave-Teilnehmer 120₂ durch den kennzeichnenden Datenabschnitt 160 bzw. durch den dritten Datenabschnitt D3, welcher hier dem dritten Alternativwert C3' entspricht, in nachvollziehbarer Weise für den Teilnehmer 120₂ als Folgefehler gekennzeichnet.

Zu diesem Zweck führt der dritte Slave-Teilnehmer 120₂ dieselbe Berechnung durch wie zuvor der zweite Slave-Teilnehmer 120₁ (vgl. zweites Prüfwert-Berechnen RX-CRC), d.h. der dritte Slave-Teilnehmer 120₂ berechnet einen fiktiven gültigen Prüfwert C mit dem nullten, ersten, zweiten und dritten Teilwert C0, C1, C2, C3 für die von dem dritten Slave-Teilnehmer 120₂ empfangenen weiteren nullten bis n-ten Datenabschnitte D_0 bis D_n. Hierbei legt der dritte Slave-Teilnehmer 120₂ ein Empfangen eines fiktiven korrekten Telegramms 170 zugrunde, bei welchem ein nach den weiteren nullten bis n-ten Datenabschnitten D_0 bis D_n vorliegender Endbereich 157 den gültigen Prüfwert C wiedergeben würde. Weiterhin ermittelt der dritte Slave-Teilnehmer 120₂ einen dritten Alternativwert C3' für den letzten gültigen dritten Teilwert C3 durch Anwenden des vorgegebenen Berechnungsalgorithmus (zum Beispiel Invertieren) auf den dritten Teilwert C3. Sofern der durch den dritten Slave-Teilnehmer 120₂ berechnete dritte Alternativwert C3' dem empfangenen dritten Alternativwert C3' entspricht, und der dritte Slave-Teilnehmer 120₂ infolgedessen die Kennzeichnung erkennen kann, kann der Fehler des empfangenen Telegramms 150 durch den dritten Teilnehmer 120₂ als Folgefehler berücksichtigt werden. Zu diesem Zweck wird der Folgefehler-Fehlerzähler 131 des dritten Slave-Teilnehmers 120₂ inkrementiert.

Figur 4 zeigt ferner, dass der dritte Slave-Teilnehmer 120₂ das fehlerhafte Telegramm 150 ebenfalls mit einem kennzeichnenden Datenabschnitt 160 an dessen Ende an den nächsten Slave-Teilnehmer 120 (letzter Slave-Teilnehmer 120₃, vgl. Figur 1) weitersendet (vgl. zweites Senden TX 2). Dabei führt der dritte Slave-Teilnehmer 120₂ dieselben Schritte durch wie der zweite Slave-Teilnehmer 120₁. Der dritte Slave-Teilnehmer 120₂ stellt zwar keinen Symbolfehler, sondern stattdessen einen Prüfwertfehler sowie gegebenenfalls zusätzlich einen Fehler in Form eines zu kurzen Telegramms 150 fest. Das Kennzeichnen des weitergesendeten Telegramms 150 erfolgt jedoch auch hier dadurch, dass der kennzeichnende Datenabschnitt 160 entsprechend der obigen Beschreibung durch Durchführen der vorgegebenen Berechnung festgelegt und nach dem zweiten Datenabschnitt D2 gesendet wird.

Im Folgenden werden weitere Verfahrensvarianten beschrieben, welche in Bezug auf weitere mögliche Fehlerarten in Betracht kommen können. Bei diesen Varianten wird analog zu den anhand der Figuren 3 und 4 erläuterten Diagrammen vorgegangen, d.h. dass ein zum Kennzeichnen eines Telegramms 150 an dessen Ende verwendeter kennzeichnender Datenabschnitt 160 aus einem von zwei vorgegebenen Datenabschnitten, d.h. einem ersten oder zweiten vorgegebenen Datenabschnitt V1 oder V2, ausgewählt, oder der Datenabschnitt 160 durch Durchführen einer vorgegebenen Berechnung festgelegt wird. In diesem Zusammenhang wird darauf hingewiesen, dass übereinstimmende Verfahrensschritte und Merkmale sowie gleiche und gleich wirkende Komponenten im Folgenden nicht erneut detailliert beschrieben werden. Für Details hierzu wird stattdessen auf die obige Beschreibung Bezug genommen. Ferner können Aspekte und Details, welche in Bezug auf eine Ausgestaltung genannt werden, auch in Bezug auf eine andere Ausgestaltung zur Anwendung kommen.

Die in dem Kommunikationsnetzwerk 100 für den Datenaustausch genutzten Telegramme 150 können eine Längeninformation enthalten, also eine Information über die Anzahl der Datenabschnitte 155 eines Telegramms 150. Die Längeninformation kann in Datenabschnitten 155 am Beginn eines Telegramms 150 enthalten sein. Eine Störung kann dazu führen, dass ein Slave-Teilnehmer 120 beim Empfangen eines Telegramms 150 eine von der Längeninformation abweichende größere oder kleinere Anzahl an Datenabschnitten 155 empfängt, und damit ein Längenfehler vorliegt.

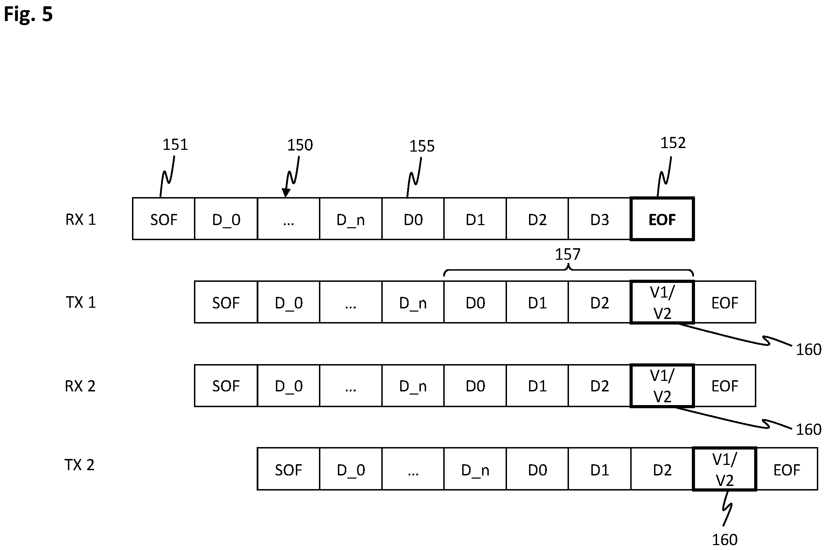

Das Diagramm von Figur 5 zeigt ein Vorliegen eines Längenfehlers in Form eines zu kurzen Telegramms 150. In Figur 5 ist hierzu als Beispiel veranschaulicht, dass der zweite Slave-Teilnehmer 120₁ beim Empfangen des Telegramms 150 bereits nach dem dritten Datenabschnitt D3, und damit zu früh, das das Ende des Telegramms 150 anzeigende EOF-Feld 152 empfängt. Hierbei ist die Anzahl der empfangenen Datenabschnitte 155 kleiner als die durch die Längeninformation des Telegramms 150 wiedergegebene Anzahl der Datenabschnitte 155.

Nach einem Feststellen des Längenfehlers durch den zweiten Slave-Teilnehmer 120₁ wird das versetzte Weitersenden des Telegramms 150 an den nächsten bzw. dritten Slave-Teilnehmer 120₂ dadurch beendet, dass der zweite Slave-Teilnehmer 120₁ nach dem zweiten Datenabschnitt D2 einen kennzeichnenden Datenabschnitt 160 sendet und anschließend das Senden des Telegramms 150 durch Senden des EOF-Felds 152 abschließt. Ferner findet ein Inkrementieren des Erstfehler-Fehlerzählers 130 sowie gegebenenfalls eines weiteren und sich auf einen Längenfehler (zu kurzes Telegramm 150) beziehenden Fehlerzählers 132 des zweiten Slave-Teilnehmers 120₁ statt.

Gemäß der Verfahrensvariante von Figur 5 wird der kennzeichnende Datenabschnitt 160 aus einem ersten vorgegebenen Datenabschnitt V1 und einem zweiten vorgegebenen Datenabschnitt V2 ausgewählt. Das von dem zweiten Slave-Teilnehmer 120₁ an den nächsten bzw. dritten Slave-Teilnehmer 120₂ gesendete und von diesem empfangene Telegramm 150 weist einen den nullten Datenabschnitt D0, den ersten Datenabschnitt D1, den zweiten Datenabschnitt D2 und den kennzeichnenden Datenabschnitt 160 umfassenden Endbereich 157 auf (vgl. erstes Senden TX 1 und zweites Empfangen RX 2). Der durch den Endbereich 157 wiedergegebene Prüfwert bezieht sich auf die vorhergehenden weiteren nullten bis n-ten Datenabschnitte D_0 bis D_n. Der zweite Slave-Teilnehmer 120₁ wählt, entsprechend der obigen Beschreibung zu Figur 3, einen von den beiden vorgegebenen Datenabschnitten V1, V2 aus, und zwar dahingehend, dass der nächste bzw. dritte Teilnehmer 120₂ einen Endbereich 157 erhält, welcher einen ungültigen Prüfwert wiedergibt bzw. welcher einen ungültigen und sich möglichst groß von einem gültigen Prüfwert unterscheidenden Prüfwert wiedergibt.

Das von dem nächsten bzw. dritten Slave-Teilnehmer 120₂ empfangene Telegramm 150 weist insofern einen einen ungültigen Prüfwert wiedergebenden Endbereich 157 auf, so dass das Telegramm 150 von dem dritten Slave-Teilnehmer 120₂ als fehlerhaft erkannt werden kann. Das Telegramm 150 ist aufgrund des kennzeichnenden Datenabschnitts 160 ferner in erkennbarer Weise für den dritten Slave-Teilnehmer 120₂ gekennzeichnet, so dass der Fehler des Telegramms 150 von diesem als Folgefehler berücksichtigt wird. Dies erfolgt durch Inkrementieren des Folgefehler-Fehlerzählers 131 des dritten Slave-Teilnehmers 120₂.

Figur 5 zeigt des Weiteren, dass der dritte Slave-Teilnehmer 120₂ das fehlerhafte Telegramm 150 ebenfalls mit einem kennzeichnenden Datenabschnitt 160 an dessen Ende an den nächsten Slave-Teilnehmer 120 (letzter Slave-Teilnehmer 120₃, vgl. Figur 1) weitersendet (vgl. zweites Senden TX 2). Hierbei führt der dritte Slave-Teilnehmer 120₂ dieselben Schritte durch wie der zweite Slave-Teilnehmer 120₁, indem der kennzeichnende Datenabschnitt 160 aus einem von dem ersten oder zweiten vorgegeben Datenabschnitt V1, V2 ausgewählt und nach dem zweiten Datenabschnitt D2 gesendet wird.

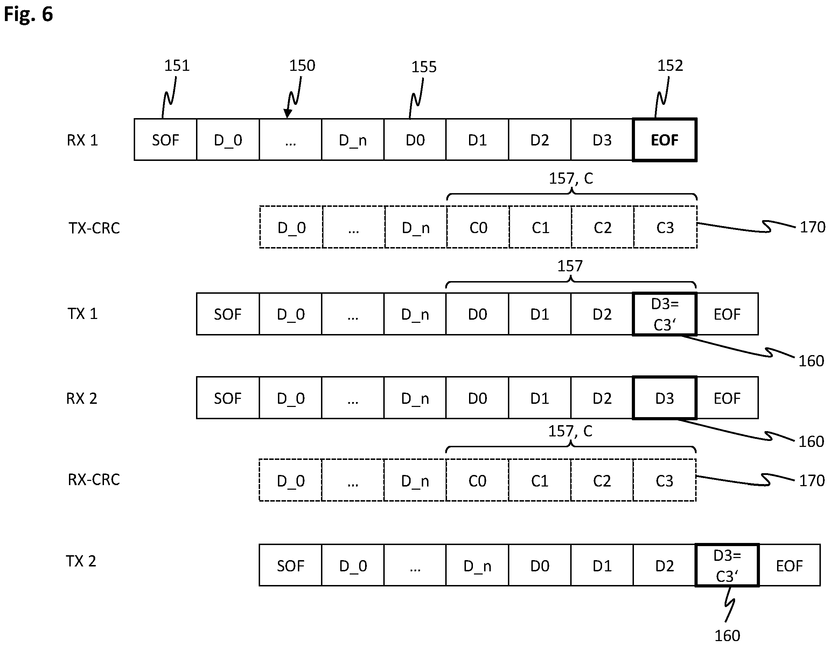

Das Diagramm von Figur 6 zeigt eine weitere Verfahrensvariante, welche bei Vorliegen eines Längenfehlers in Form eines zu kurzen Telegramms 150 durchgeführt werden kann. Auch hierbei wird durch den zweiten Slave-Teilnehmer 120₁, nach Feststellen des Längenfehlers, das Weitersenden des Telegramms 150 an den nächsten bzw. dritten Slave-Teilnehmer 120₂ beendet, indem der zweite Slave-Teilnehmer 120₁ nach dem zweiten Datenabschnitt D2 einen kennzeichnenden Datenabschnitt 160 sendet und anschließend das Senden des Telegramms 150 durch Senden des EOF-Felds 152 abschließt (vgl. erstes Senden TX 1). Ferner erfolgt ein Inkrementieren des Erstfehler-Fehlerzählers 130 sowie gegebenenfalls eines weiteren und sich auf einen Längenfehler (verkürztes Telegramm 150) beziehenden Fehlerzählers 132 des zweiten Slave-Teilnehmers 120₁.

Bei der Verfahrensvariante von Figur 6 wird der kennzeichnende Datenabschnitt 160 durch Durchführen einer vorgegebenen Berechnung festgelegt. Der zweite Slave-Teilnehmer 120₁ berechnet hierzu einen fiktiven gültigen Prüfwert C umfassend den nullten Teilwert C0, den ersten Teilwert C1, den zweiten Teilwert C2 und den dritten Teilwert C3 für die zuvor an den nächsten bzw. dritten Teilnehmer 120₂ gesendeten weiteren nullten bis n-ten Datenabschnitte D_0 bis D_n. Bei diesem Vorgang legt der zweite Slave-Teilnehmer 120₁ ein Senden eines fiktiven korrekten Telegramms 170 zugrunde, dessen Endbereich 157 den gültigen Prüfwert C wiedergeben würde (vgl. erstes Prüfwert-Berechnen TX-CRC). Des Weiteren bildet der zweite Slave-Teilnehmer 120₁ einen dritten Alternativwert C3' durch Anwenden eines vorgegebenen Berechnungsalgorithmus (zum Beispiel Invertieren) auf den dritten Teilwert C3. Dieser wird als kennzeichnender Datenabschnitt 160 bzw. dritter Datenabschnitt D3, welcher hier dem dritten Alternativwert C3' entspricht, nach dem zweiten Datenabschnitt D2 an den nächsten bzw. dritten Slave-Teilnehmer 120₂ gesendet.

Das von dem nächsten bzw. dritten Slave-Teilnehmer 120₂ empfangene Telegramm 150 weist einen einen ungültigen Prüfwert wiedergebenden Endbereich 157 umfassend den nullten Datenabschnitt D0, den ersten Datenabschnitt D1, den zweiten Datenabschnitt D2 und den kennzeichnenden Datenabschnitt 160 auf, so dass das Telegramm 150 von dem dritten Slave-Teilnehmer 120₂ als fehlerhaft erkannt werden kann. Ferner ist das Telegramm 150 für den dritten Slave-Teilnehmer 120₂ durch den kennzeichnenden Datenabschnitt 160 bzw. den dritten Datenabschnitt D3, welcher hier dem dritten Alternativwert C3' entspricht, in nachvollziehbarer Weise für den dritten Slave-Teilnehmer 120₂ als Folgefehler gekennzeichnet.

Hierzu führt der dritte Slave-Teilnehmer 120₂ dieselbe Berechnung durch wie zuvor der zweite Slave-Teilnehmer 120₁, indem der dritte Slave-Teilnehmer 120₂ einen fiktiven gültigen Prüfwert C mit dem nullten Teilwert C0, dem ersten Teilwert C1, dem zweiten Teilwert C2 und dem dritten Teilwert C3 für die von dem dritten Slave-Teilnehmer 120₂ empfangenen weiteren nullten bis n-ten Datenabschnitte D_0 bis D_n berechnet. Dabei legt der dritte Slave-Teilnehmer 120₂ ein Empfangen eines fiktiven korrekten Telegramms 170 zugrunde, dessen Endbereich 157 den korrekten Prüfwert C wiedergeben würde (vgl. zweites Prüfwert-Berechnen RX-CRC). Ferner ermittelt der dritte Slave-Teilnehmer 120₂ einen dritten Alternativwert C3' durch Anwenden des vorgegebenen Berechnungsalgorithmus auf den dritten Teilwert C3. Bei einer Übereinstimmung zwischen dem berechneten und dem empfangenen dritten Alternativwert C3' kann der dritte Slave-Teilnehmer 120₂ die Kennzeichnung erkennen und das Telegramm 150 als Folgefehler berücksichtigen. Hierzu wird der Folgefehler-Fehlerzähler 131 des dritten Slave-Teilnehmers 120₂ inkrementiert.

Figur 6 veranschaulicht ferner, dass der dritte Slave-Teilnehmer 120₂ das fehlerhafte Telegramm 150 ebenfalls mit einem kennzeichnenden Datenabschnitt 160 an dessen Ende an den nächsten Slave-Teilnehmer 120 (letzter Slave-Teilnehmer 120₃, vgl. Figur 1) weitersendet (vgl. zweites Senden TX 2). Hierbei führt der dritte Slave-Teilnehmer 120₂ dieselben Schritte durch wie der zweite Slave-Teilnehmer 120₁, indem der kennzeichnende Datenabschnitt 160 durch Durchführen der vorgegebenen Berechnung festgelegt und nach dem zweiten Datenabschnitt D2 gesendet wird.

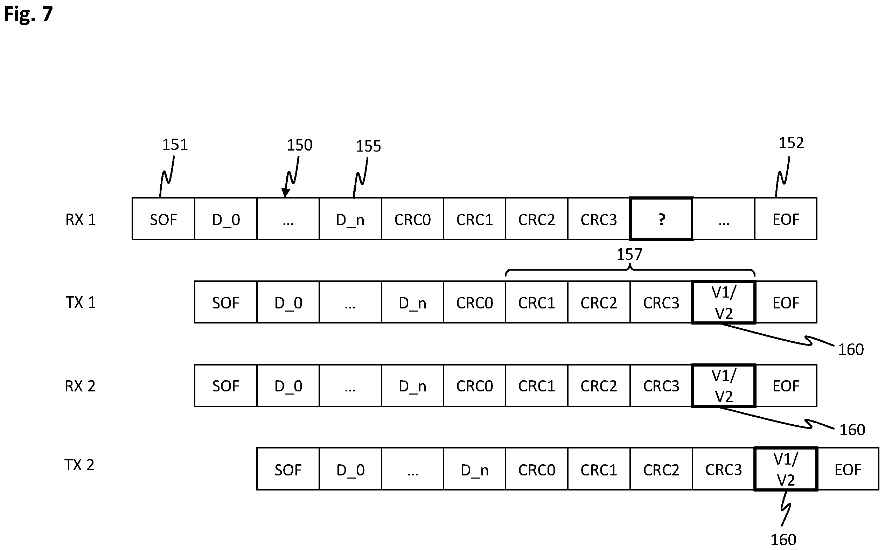

Das Diagramm von Figur 7 zeigt ein Vorliegen eines Längenfehlers in Form eines zu langen Telegramms 150. In Figur 7 ist hierzu als Beispiel veranschaulicht, dass der zweite Slave-Teilnehmer 120₁ beim Empfangen des Telegramms 150 nach einem dritten Prüfwert-Datenabschnitt CRC3 anstelle des EOF-Felds 152 noch (wenigstens) einen Datenabschnitt 155 empfängt, welcher in Figur 7 mit einem Fragezeichen gekennzeichnet ist. Hierbei ist die Anzahl der empfangenen Datenabschnitte 155 größer als die durch die Längeninformation des Telegramms 150 wiedergegebene Anzahl der Datenabschnitte 155. In Figur 7 sind die vier Datenabschnitte 155, welche sich vor dem mit dem Fragezeichen gekennzeichneten Datenabschnitt 155 befinden, als nullter Prüfwert-Datenabschnitt CRC0, erster Prüfwert-Datenabschnitt CRC1, zweiter Prüfwert-Datenabschnitt CRC2 und dritter Prüfwert-Datenabschnitt CRC3 dargestellt. Vor dem Feststellen des Längenfehlers werden die vier Prüfwert-Datenabschnitte CRC0, CRC1, CRC2, CRC3 von dem zweiten Slave-Teilnehmer 120₁ als Endbereich 157 behandelt und damit als Prüfwert in Bezug auf die vorhergehenden weiteren nullten bis n-ten Datenabschnitte D_0 bis D_n interpretiert. Denn falls kein Längenfehler vorliegen würde, würden die vier Prüfwert-Datenabschnitte CRC0, CRC1, CRC2, CRC3 die letzten Datenabschnitte 155 des Telegramms 150 bilden. An den nächsten bzw. dritten Slave-Teilnehmer 120₂ werden daher bereits die vier korrekten Prüfwert-Datenabschnitte CRC0, CRC1, CRC2, CRC3 übermittelt, welche eine Fehlerfreiheit der zuvor gesendeten weiteren nullten bis n-ten Datenabschnitte D_0 bis D_n wiedergeben.

Nach einem Feststellen des Längenfehlers sendet der zweite Slave-Teilnehmer 120₁ daher im Anschluss an den dritten Prüfwert-Datenabschnitt CRC3 einen kennzeichnenden Datenabschnitt 160 und nachfolgend das EOF-Feld 152 an den nächsten bzw. dritten Slave-Teilnehmer 120₂. Ferner erfolgt ein Inkrementieren des Erstfehler-Fehlerzählers 130 sowie gegebenenfalls eines weiteren und sich auf einen Längenfehler (zu langes Telegramm 150) beziehenden Fehlerzählers 132 des zweiten Slave-Teilnehmers 120₁.

Bei der Verfahrensvariante von Figur 7 wird der kennzeichnende Datenabschnitt 160 aus einem ersten vorgegebenen Datenabschnitt V1 und einem zweiten vorgegebenen Datenabschnitt V2 ausgewählt. Das von dem zweiten Slave-Teilnehmer 120₁ an den nächsten bzw. dritten Slave-Teilnehmer 120₂ gesendete und von diesem empfangene Telegramm 150 weist vorliegend einen den ersten Prüfwert-Datenabschnitt CRC1, den zweiten Prüfwert-Datenabschnitt CRC2, den dritten Prüfwert-Datenabschnitt CRC3 und den kennzeichnenden Datenabschnitt 160 umfassenden Endbereich 157 auf (vgl. erstes Senden TX 1 und zweites Empfangen RX 2). Der durch den Endbereich 157 wiedergegebene Prüfwert bezieht sich auf die vorhergehenden Datenabschnitte 155, d.h. vorliegend die Datenabschnitte 155 ausgehend von dem weiteren nullten Datenabschnitt D_0 bis zu dem nullten Prüfwert-Datenabschnitt CRC0. Der zweite Slave-Teilnehmer 120₁ wählt, analog zu der obigen Beschreibung, einen von den beiden vorgegebenen Datenabschnitten V1, V2 aus. Dies erfolgt derart, dass der nächste bzw. dritte Slave-Teilnehmer 120₂ einen sich vorliegend auf den weiteren nullten Datenabschnitt D_0 bis nullten Prüfwert-Datenabschnitt CRC0 beziehenden Endbereich 157 erhält, welcher einen ungültigen Prüfwert wiedergibt bzw. welcher einen ungültigen und sich möglichst groß von einem gültigen Prüfwert unterscheidenden Prüfwert wiedergibt.

Das von dem nächsten bzw. dritten Teilnehmer 120₂ empfangene Telegramm 150 weist einen einen ungültigen Prüfwert wiedergebenden Endbereich 157 umfassend den Prüfwert-Datenabschnitt CRC1, den Prüfwert-Datenabschnitt CRC2, den Prüfwert-Datenabschnitt CRC3 und den kennzeichnenden Datenabschnitt 160 auf, so dass das Telegramm 150 von dem dritten Slave-Teilnehmer 120₂ als fehlerhaft erkannt werden kann. Ein Vorliegen eines Fehlers kann der dritte Slave-Teilnehmer 120₂ zudem daran erkennen, dass das empfangene Telegramm 150 aufgrund des zusätzlichen kennzeichnenden Datenabschnitts 160 an dessen Ende eine zu große Länge besitzt. Das Telegramm 150 ist aufgrund des kennzeichnenden Datenabschnitts 160 ferner in erkennbarer Weise für den dritten Slave-Teilnehmer 120₂ gekennzeichnet, so dass das fehlerhafte Telegramm 150 von diesem als Folgefehler berücksichtigt wird. Dies erfolgt durch Inkrementieren des Folgefehler-Fehlerzählers 131 des dritten Slave-Teilnehmers 120₂.

Figur 7 zeigt des Weiteren, dass der dritte Slave-Teilnehmer 120₂ das fehlerhafte Telegramm 150 ebenfalls mit einem kennzeichnenden Datenabschnitt 160 an dessen Ende an den nächsten Slave-Teilnehmer 120 (letzter Slave-Teilnehmer 120₃, vgl. Figur 1) weitersendet (vgl. zweites Senden TX 2). Hierbei führt der dritte Slave-Teilnehmer 120₂ dieselben Schritte durch wie der zweite Slave-Teilnehmer 120₁, indem der kennzeichnende Datenabschnitt 160 aus einem von dem ersten oder zweiten vorgegebenen Datenabschnitt V1, V2 ausgewählt und nach dem dritten Prüfwert-Datenabschnitt CRC3 gesendet wird.

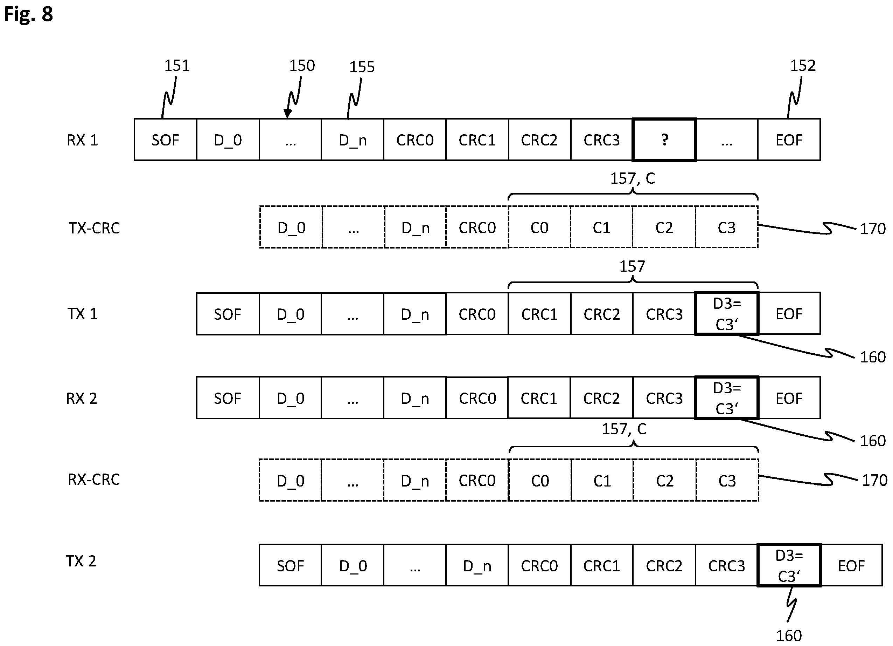

Das Diagramm von Figur 8 zeigt eine weitere Verfahrensvariante, welche bei Vorliegen eines Längenfehlers in Form eines zu langen Telegramms 150 durchgeführt werden kann. Auch hierbei sendet der zweite Slave-Teilnehmer 120₁, nach Feststellen des Längenfehlers, im Anschluss an den dritten Prüfwert-Datenabschnitt CRC3 einen kennzeichnenden Datenabschnitt 160 und nachfolgend das EOF-Feld 152 an den nächsten bzw. dritten Slave-Teilnehmer 120₂ (vgl. erstes Senden TX 1). Ferner erfolgt ein Inkrementieren des Erstfehler-Fehlerzählers 130 sowie gegebenenfalls eines weiteren und sich auf einen Längenfehler (zu langes Telegramm 150) beziehenden Fehlerzählers 132 des zweiten Slave-Teilnehmers 120₁.

Bei der Verfahrensvariante von Figur 8 wird der kennzeichnende Datenabschnitt 160 durch Durchführen einer vorgegebenen Berechnung festgelegt. Der zweite Slave-Teilnehmer 120₁ berechnet hierbei einen fiktiven gültigen Prüfwert C umfassend den nullten Teilwert C0, den ersten Teilwert C1, den zweiten Teilwert C2 und den dritten Teilwert C3 für zuvor an den nächsten bzw. dritten Teilnehmer 120₂ gesendete Datenabschnitte 155 umfassend den weiteren nullten Datenabschnitt D_0 bis nullten Prüfwert-Datenabschnitt CRC0. Bei diesem Vorgang legt der zweite Slave-Teilnehmer 120₁ ein Senden eines fiktiven korrekten Telegramms 170 zugrunde, dessen Endbereich 157 den gültigen Prüfwert C wiedergeben würde (vgl. erstes Prüfwert-Berechnen TX-CRC). Des Weiteren bildet der zweite Slave-Teilnehmer 120₁ einen dritten Alternativwert C3' durch Anwenden eines vorgegebenen Berechnungsalgorithmus (zum Beispiel Invertieren) auf den dritten Teilwert C3. Der dritte Alternativwert C3' wird als kennzeichnender Datenabschnitt 160 bzw. dritter Datenabschnitt D3, welcher hier dem dritten Alternativwert C3' entspricht, nach dem dritten Prüfwert-Datenabschnitt CRC3 an den nächsten bzw. dritten Slave-Teilnehmer 120₂ gesendet.

Das von dem nächsten bzw. dritten Teilnehmer 120₂ empfangene Telegramm 150 weist einen einen ungültigen Prüfwert wiedergebenden Endbereich 157 umfassend den ersten Prüfwert-Datenabschnitt CRC1, den zweiten Prüfwert-Datenabschnitt CRC2, den dritten Prüfwert-Datenabschnitt CRC3 und den kennzeichnenden Datenabschnitt 160 auf, so dass das Telegramm 150 von dem dritten Slave-Teilnehmer 120₂ als fehlerhaft erkannt werden kann. Ein Vorliegen eines Fehlers kann der dritte Slave-Teilnehmer 120₂ zudem daran erkennen, dass das empfangene Telegramm 150 aufgrund des zusätzlichen kennzeichnenden Datenabschnitts 160 an dessen Ende eine zu große Länge besitzt. Das Telegramm 150 ist für den dritten Slave-Teilnehmer 120₂ des Weiteren durch den kennzeichnenden Datenabschnitt 160 bzw. den dritten Datenabschnitt D3, welcher hier dem dritten Alternativwert C3' entspricht, in nachvollziehbarer Weise für den dritten Slave-Teilnehmer 120₂ als Folgefehler gekennzeichnet.

Hierzu führt der dritte Slave-Teilnehmer 120₂ dieselbe Berechnung durch wie zuvor der zweite Slave-Teilnehmer 120₁, indem der dritte Slave-Teilnehmer 120₂ einen fiktiven gültigen Prüfwert C mit dem nullten Teilwert C0, dem ersten Teilwert C1, dem zweiten Teilwert C2 und dem dritten Teilwert C3 für die von dem dritten Slave-Teilnehmer 120₂ empfangenen Datenabschnitte 155 umfassend den weiteren nullten Datenabschnitt D_0 bis nullten Prüfwert-Datenabschnitt CRC0 berechnet. Hierbei legt der dritte Slave-Teilnehmer 120₂ ein Empfangen eines fiktiven korrekten Telegramms 170 zugrunde, dessen Endbereich 157 den korrekten Prüfwert C wiedergeben würde (vgl. zweites Prüfwert-Berechnen RX-CRC). Ferner ermittelt der dritte Slave-Teilnehmer 120₂ einen dritten Alternativwert C3' durch Anwenden des vorgegebenen Berechnungsalgorithmus auf den dritten Teilwert C3. Falls der berechnete und der empfangene dritte Alternativwert C3' übereinstimmen, kann der dritte Slave-Teilnehmer 120₂ die Kennzeichnung erkennen und das Telegramm 150 als Folgefehler berücksichtigen. Hierzu wird der Folgefehler-Fehlerzähler 131 des dritten Slave-Teilnehmers 120₂ inkrementiert.

Figur 8 zeigt des Weiteren, dass der dritte Slave-Teilnehmer 120₂ das fehlerhafte Telegramm 150 ebenfalls mit einem kennzeichnenden Datenabschnitt 160 an dessen Ende an den nächsten Slave-Teilnehmer 120 (letzter Slave-Teilnehmer 120₃, vgl. Figur 1) weitersendet (vgl. zweites Senden TX 2). Hierbei führt der dritte Slave-Teilnehmer 120₂ dieselben Schritte durch wie der zweite Slave-Teilnehmer 120₁, indem der kennzeichnende Datenabschnitt 160 durch Durchführen der vorgegebenen Berechnung festgelegt und nach dem dritten Prüfwert-Datenabschnitt CRC3 gesendet wird.

Ein Auftreten eines Fehlers kann ferner darin bestehen, dass ein Slave-Teilnehmer 120 beim Empfangen eines eine Längeninformation enthaltenden Telegramms 150 eine der Längeninformation entsprechende Anzahl von Datenabschnitten 155 empfängt, jedoch ein Prüfwertfehler in Form eines ungültigen Prüfwerts vorliegt.

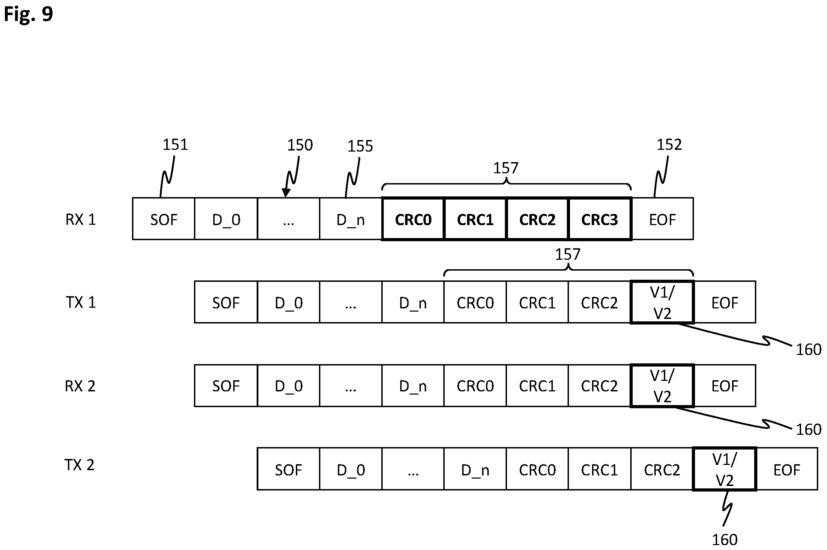

Das Diagramm von Figur 9 veranschaulicht ein Vorliegen eines solchen Prüfwertfehlers. Hierbei empfängt der zweite Slave-Teilnehmer 120₁ ein Telegramm 150, bei welchem der die vier Prüfwert-Datenabschnitte CRC0, CRC1, CRC2, CRC3 umfassende Endbereich 157 einen Prüfwert wiedergibt, welcher von einem durch die vorhergehenden weiteren nullten bis n-ten Datenabschnitte D_0 bis D_n vorgegebenen bzw. mit diesen verknüpften erwarteten Prüfwert abweicht. Nach einem Feststellen des Prüfwertfehlers, was der zweite Slave-Teilnehmer 120₁ anhand eines Vergleichs der vorgenannten Prüfwerte durchführen kann, sendet der zweite Slave-Teilnehmer 120₁ daher im Anschluss an den zweiten Prüfwert-Datenabschnitt CRC2 einen kennzeichnenden Datenabschnitt 160 und nachfolgend das EOF-Feld 152 an den nächsten bzw. dritten Slave-Teilnehmer 120₂. Ferner erfolgt ein Inkrementieren des Erstfehler-Fehlerzählers 130 sowie gegebenenfalls eines weiteren und sich auf einen Prüfwertfehler beziehenden Fehlerzählers 132 des zweiten Slave-Teilnehmers 120₁.

Bei der Verfahrensvariante von Figur 9 wird der kennzeichnende Datenabschnitt 160 aus einem ersten vorgegebenen Datenabschnitt V1 und einem zweiten vorgegebenen Datenabschnitt V2 ausgewählt. Das von dem zweiten Slave-Teilnehmer 120₁ an den nächsten bzw. dritten Slave-Teilnehmer 120₂ gesendete und von diesem empfangene Telegramm 150 weist einen den nullten Prüfwert-Datenabschnitt CRC0, den ersten Prüfwert-Datenabschnitt CRC1, den zweiten Prüfwert-Datenabschnitt CRC2 und den kennzeichnenden Datenabschnitt 160 umfassenden Endbereich 157 auf (vgl. erstes Senden TX 1 und zweites Empfangen RX 2). Der durch den Endbereich 157 wiedergegebene Prüfwert bezieht sich auf die vorhergehenden weiteren nullten bis n-ten Datenabschnitte D_0 bis D_n. Der zweite Slave-Teilnehmer 120₁ wählt, analog zu der obigen Beschreibung, einen von dem ersten oder zweiten vorgegebenen Datenabschnitt V1, V2 aus, und zwar dahingehend, dass der nächste bzw. dritte Slave-Teilnehmer 120₂ einen sich vorliegend auf die weiteren nullten bis n-ten Datenabschnitte D_0 bis D_n beziehenden Endbereich 157 erhält, welcher einen ungültigen Prüfwert wiedergibt bzw. welcher einen ungültigen und sich möglichst groß von einem gültigen Prüfwert unterscheidenden Prüfwert wiedergibt.

Das von dem nächsten bzw. dritten Teilnehmer 120₂ empfangene Telegramm 150 weist daher einen einen ungültigen Prüfwert wiedergebenden Endbereich 157 umfassend den nullten Prüfwert-Datenabschnitt CRC0, den ersten Prüfwert-Datenabschnitt CRC1, den zweiten Prüfwert-Datenabschnitt CRC2 und den kennzeichnenden Datenabschnitt 160 auf, so dass das Telegramm 150 von dem dritten Slave-Teilnehmer 120₂ als fehlerhaft erkannt werden kann. Aufgrund des kennzeichnenden Datenabschnitts 160 ist das Telegramm 150 ferner in erkennbarer Weise für den dritten Slave-Teilnehmer 120₂ gekennzeichnet, so dass das Telegramm 150 von dem dritten Slave-Teilnehmer 120₂ als Folgefehler berücksichtigt wird. Dies erfolgt durch Inkrementieren des Folgefehler-Fehlerzählers 131 des dritten Slave-Teilnehmers 120₂.

Figur 9 zeigt des Weiteren, dass der dritte Slave-Teilnehmer 120₂ das fehlerhafte Telegramm 150 ebenfalls mit einem kennzeichnenden Datenabschnitt 160 an dessen Ende an den nächsten Slave-Teilnehmer 120 (letzter Slave-Teilnehmer 120₃, vgl. Figur 1) weitersendet (vgl. zweites Senden TX 2). Hierbei führt der dritte Slave-Teilnehmer 120₂ dieselben Schritte durch wie der zweite Slave-Teilnehmer 120₁, indem der kennzeichnende Datenabschnitt 160 aus einem von dem ersten oder zweiten vorgegebenen Datenabschnitt V1, V2 ausgewählt und nach dem zweiten Prüfwert-Datenabschnitt CRC2 gesendet wird.

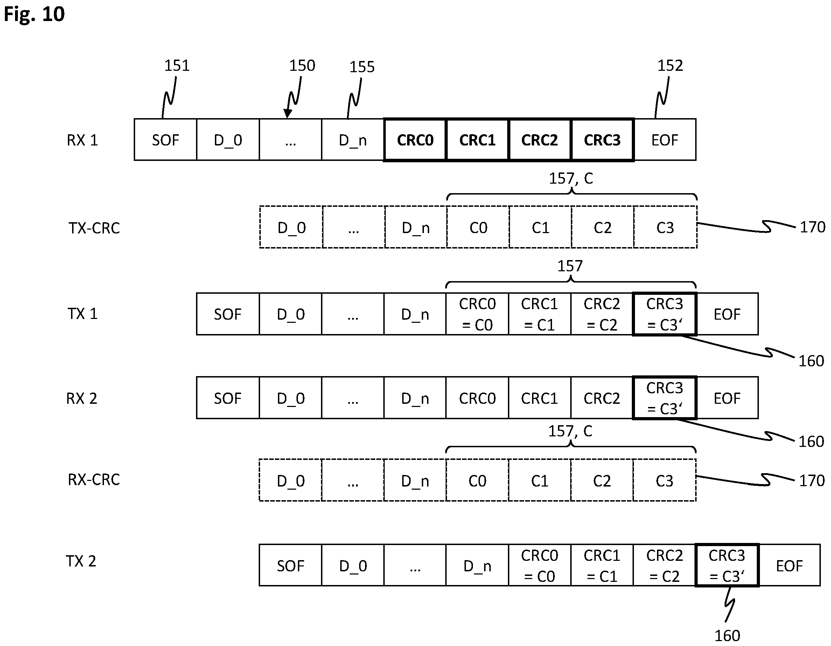

Das Diagramm von Figur 10 zeigt eine weitere Verfahrensvariante, welche bei Vorliegen einer bekannten und korrekten Telegrammlänge und Vorliegen eines Prüfwertfehlers in Betracht kommen kann. Auch hierbei sendet der zweite Slave-Teilnehmer 120₁, nach Feststellen des Prüfwertfehlers, im Anschluss an den zweiten Prüfwert-Datenabschnitt CRC2 einen kennzeichnenden Datenabschnitt 160 und nachfolgend das EOF-Feld 152 an den nächsten bzw. dritten Slave-Teilnehmer 120₂. Des Weiteren findet ein Inkrementieren des Erstfehler-Fehlerzählers 130 sowie gegebenenfalls eines weiteren und sich auf einen Prüfwertfehler beziehenden Fehlerzählers 132 des zweiten Slave-Teilnehmers 120₁ statt.

Bei der Verfahrensvariante von Figur 10 wird der kennzeichnende Datenabschnitt 160 durch Durchführen einer vorgegebenen Berechnung festgelegt. Der zweite Slave-Teilnehmer 120₁ berechnet hierbei einen fiktiven gültigen Prüfwert C umfassend den nullten Teilwert C0, den ersten Teilwert C1, den zweiten Teilwert C2 und den dritten Teilwert C3 für zuvor an den nächsten bzw. dritten Teilnehmer 120₂ gesendete weitere nullte bis n-te Datenabschnitte D_0 bis D_n. Bei diesem Vorgang legt der zweite Teilnehmer 120₁ ein Senden eines fiktiven korrekten Telegramms 170 zugrunde, dessen Endbereich 157 den gültigen Prüfwert C wiedergeben würde (vgl. erstes Prüfwert-Berechnen TX-CRC). Des Weiteren bildet der zweite Slave-Teilnehmer 120₁ einen dritten Alternativwert C3' durch Anwenden eines vorgegebenen Berechnungsalgorithmus (zum Beispiel Invertieren) auf den dritten Teilwert C3. Der dritte Alternativwert C3' wird als kennzeichnender Datenabschnitt 160 bzw. dritter Prüfwert-Datenabschnitt CRC3, welcher hier dem dritten Alternativwert C3' entspricht, nach dem zweiten Prüfwert-Datenabschnitt CRC2 an den nächsten bzw. dritten Slave-Teilnehmer 120₂ gesendet.

Das von dem nächsten bzw. dritten Teilnehmer 120₂ empfangene Telegramm 150 weist einen einen ungültigen Prüfwert wiedergebenden Endbereich 157 auf, welcher den nullten Prüfwert-Datenabschnitt CRC0, den ersten Prüfwert-Datenabschnitt CRC1, den dritten Prüfwert-Datenabschnitt CRC2 und den kennzeichnenden Datenabschnitt 160 umfasst. Wie in Figur 10 angedeutet ist, können der nullte, der erste und der zweite Prüfwert-Datenabschnitt CRC0, CRC1, CRC2 mit dem nullten, ersten und zweiten Teilwert C0, C1, C2 des von dem vorherigen bzw. zweiten Slave-Teilnehmer 120₁ bei der Berechnung des dritten Alternativwerts C3' zugrunde gelegten fiktiven Telegramms 170 (vgl. erstes Prüfwert-Berechnen TX-CRC) übereinstimmen. Aufgrund des einen ungültigen Prüfwert wiedergebenden Endbereichs 157 kann das Telegramm 150 von dem nächsten bzw. dritten Slave-Teilnehmer 120₂ als fehlerhaft erkannt werden. Auch ist das Telegramm 150 für den dritten Slave-Teilnehmer 120₂ durch den kennzeichnenden Datenabschnitt 160 bzw. den dritten Prüfwert-Datenabschnitt CRC3, welcher hier dem dritten Alternativwert C3' entspricht, in nachvollziehbarer Weise für den dritten Slave-Teilnehmer 120₂ als Folgefehler gekennzeichnet.

Hierzu führt der dritte Slave-Teilnehmer 120₂ dieselbe Berechnung durch wie zuvor der zweite Slave-Teilnehmer 120₁, indem der dritte Slave-Teilnehmer 120₂ einen fiktiven gültigen Prüfwert C mit dem nullten, ersten, zweiten und dritten Teilwert C0, C1, C2, C3 für die von dem dritten Slave-Teilnehmer 120₂ empfangenen weiteren nullten bis n-ten Datenabschnitte D_0 bis D_n berechnet. Dabei legt der dritte Slave-Teilnehmer 120₂ ein Empfangen eines fiktiven korrekten Telegramms 170 zugrunde, dessen Endbereich 157 den korrekten Prüfwert C wiedergeben würde (vgl. zweites Prüfwert-Berechnen RX-CRC). Ferner ermittelt der dritte Slave-Teilnehmer 120₂ einen dritten Alternativwert C3' durch Anwenden des vorgegebenen Berechnungsalgorithmus auf den dritten Teilwert C3. Bei einer Übereinstimmung zwischen dem berechneten und dem empfangenen dritten Alternativwert C3' kann der dritte Slave-Teilnehmer 120₂ die Kennzeichnung erkennen und das Telegramm 150 als Folgefehler berücksichtigen. Hierzu wird der Folgefehler-Fehlerzähler 131 des dritten Slave-Teilnehmers 120₂ inkrementiert.

Figur 10 zeigt des Weiteren, dass der dritte Slave-Teilnehmer 120₂ das fehlerhafte Telegramm 150 ebenfalls mit einem kennzeichnenden Datenabschnitt 160 an dessen Ende an den nächsten Slave-Teilnehmer 120 (letzter Slave-Teilnehmer 120₃, vgl. Figur 1) weitersendet (vgl. zweites Senden TX 2). Hierbei führt der dritte Slave-Teilnehmer 120₂ dieselben Schritte durch wie der zweite Slave-Teilnehmer 120₁, indem der kennzeichnende Datenabschnitt 160 mittels der vorgegebenen Berechnung festgelegt und nach dem zweiten Prüfwert-Datenabschnitt CRC2 gesendet wird.

Mit Bezug auf das Kommunikationsnetzwerk 100 ist es des Weiteren möglich, dass die Telegramme 150 keine Längeninformation enthalten. Beim Empfangen eines Telegramms 150 kann in entsprechender Weise dessen Endbereich 157 einen ungültigen und damit einen Fehler anzeigenden Prüfwert wiedergeben, so dass ein Prüfwertfehler vorliegt.

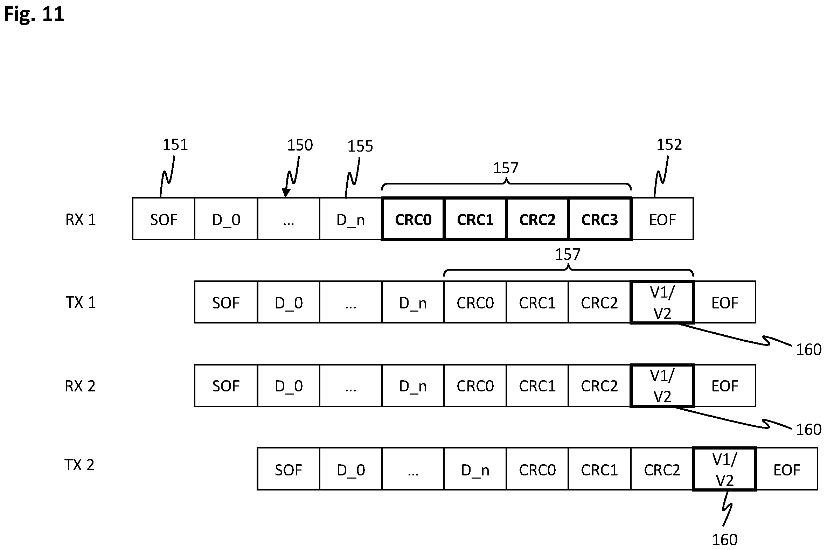

Das Diagramm von Figur 11 zeigt ein Vorliegen eines solchen Prüfwertfehlers. Hierbei empfängt der zweite Slave-Teilnehmer 120₁ ein Telegramm 150, bei welchem der die vier Prüfwert-Datenabschnitte CRC0, CRC1, CRC2, CRC3 umfassende Endbereich 157 einen Prüfwert wiedergibt, welcher von einem durch die vorhergehenden weiteren nullten bis n-ten Datenabschnitte D_0 bis D_n vorgegebenen bzw. mit diesen verknüpften erwarteten Prüfwert abweicht. Da das Telegramm 150 keine Längeninformation enthält, kann der zweite Slave-Teilnehmer 120₁ den Prüfwertfehler erst mit Empfangen des EOF-Felds 152 feststellen. Denn erst anhand des EOF-Felds 152 kann der zweite Slave-Teilnehmer 120₁ das Telegrammende, und damit den die vier Prüfwert-Datenabschnitte CRC0, CRC1, CRC2, CRC3 umfassenden Endbereich 157 bestimmen. Nach dem Feststellen des Prüfwertfehlers sendet der zweite Slave-Teilnehmer 120₁ im Anschluss an den zweiten Prüfwert-Datenabschnitt CRC2 einen kennzeichnenden Datenabschnitt 160 und dann das EOF-Feld 152 an den nächsten bzw. dritten Slave-Teilnehmer 120₂. Ferner erfolgt ein Inkrementieren des Erstfehler-Fehlerzählers 130 sowie gegebenenfalls eines weiteren und sich auf einen Prüfwertfehler beziehenden Fehlerzählers 132 des zweiten Slave-Teilnehmers 120₁.

Bei der in Figur 11 gezeigten Verfahrensvariante wird entsprechend der Variante von Figur 9 der kennzeichnende Datenabschnitt 160 aus einem ersten oder zweiten vorgegebenen Datenabschnitt V1 bzw. V2 ausgewählt. Das von dem zweiten Slave-Teilnehmer 120₁ an den nächsten bzw. dritten Slave-Teilnehmer 120₂ gesendete Telegramm 150 weist einen den nullten, ersten und zweiten Prüfwert-Datenabschnitt CRC0, CRC1, CRC2 und den kennzeichnenden Datenabschnitt 160 umfassenden Endbereich 157 auf (vgl. erstes Senden TX 1 und erstes Empfangen RX 2). Der durch den Endbereich 157 wiedergegebene Prüfwert bezieht sich auf die weiteren nullten bis n-ten Datenabschnitte D_0 bis D_n. Der zweite Slave-Teilnehmer 120₁ wählt einen von den beiden vorgegebenen Datenabschnitten V1, V2 aus, und zwar dahingehend, dass der nächste bzw. dritte Teilnehmer 120₂ einen Endbereich 157 erhält, welcher einen ungültigen Prüfwert wiedergibt bzw. welcher einen ungültigen und sich möglichst groß von einem gültigen Prüfwert unterscheidenden Prüfwert wiedergibt.

Das von dem nächsten bzw. dritten Teilnehmer 120₂ empfangene Telegramm 150 weist einen einen ungültigen Prüfwert wiedergebenden Endbereich 157 auf, so dass das Telegramm 150 von dem dritten Slave-Teilnehmer 120₂ als fehlerhaft erkannt werden kann. Aufgrund des kennzeichnenden Datenabschnitts 160 ist das Telegramm 150 ferner in erkennbarer Weise für den dritten Slave-Teilnehmer 120₂ gekennzeichnet, so dass das Telegramm 150 von dem dritten Slave-Teilnehmer 120₂ als Folgefehler berücksichtigt wird. Dies erfolgt durch Inkrementieren des Folgefehler-Fehlerzählers 131 des dritten Slave-Teilnehmers 120₂.

Figur 11 zeigt ferner, dass der dritte Slave-Teilnehmer 120₂ das fehlerhafte Telegramm 150 ebenfalls mit einem kennzeichnenden Datenabschnitt 160 an dessen Ende an den nächsten Slave-Teilnehmer 120 (letzten Slave-Teilnehmer 120₃, vgl. Figur 1) weitersendet (vgl. zweites Senden TX 2). Hierbei führt der dritte Slave-Teilnehmer 120₂ dieselben Schritte durch wie der zweite Slave-Teilnehmer 120₁, indem der kennzeichnende Datenabschnitt 160 aus einem von dem ersten oder zweiten vorgegebenen Datenabschnitt V1, V2 ausgewählt und nach dem zweiten Prüfwert-Datenabschnitt CRC2 gesendet wird.

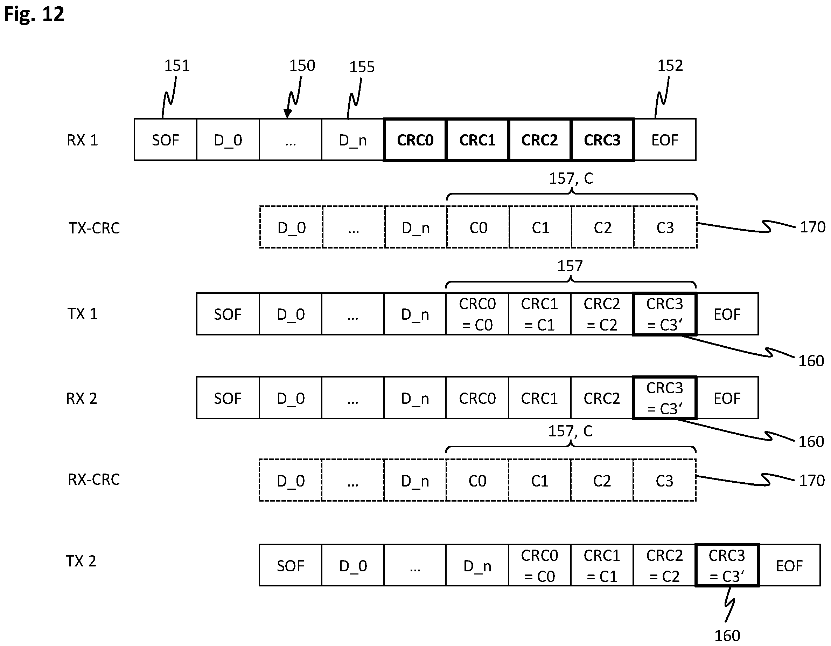

Das Diagramm von Figur 12 zeigt eine weitere Verfahrensvariante, welche bei unbekannter Telegrammlänge und Vorliegen eines Prüfwertfehlers in Betracht kommen kann. Auch hierbei sendet der zweite Slave-Teilnehmer 120₁, nach Feststellen des Prüfwertfehlers, einen kennzeichnenden Datenabschnitt 160 nach dem zweiten Prüfwert-Datenabschnitt CRC2 und nachfolgend das EOF-Feld 152 an den nächsten bzw. dritten Slave-Teilnehmer 120₂. Ferner erfolgt ein Inkrementieren des Erstfehler-Fehlerzählers 130 sowie gegebenenfalls eines weiteren und sich auf einen Prüfwertfehler beziehenden Fehlerzählers 132 des zweiten Slave-Teilnehmers 120₁.

Bei der in Figur 12 gezeigten Verfahrensvariante wird der kennzeichnende Datenabschnitt 160 wie bei der Variante von Figur 10 durch Durchführen einer vorgegebenen Berechnung festgelegt. Der zweite Slave-Teilnehmer 120₁ berechnet hierbei einen fiktiven gültigen Prüfwert C umfassend den nullten, ersten, zweiten und dritten Teilwert C0, C1, C2, C3 für zuvor an den nächsten bzw. dritten Slave-Teilnehmer 120₂ gesendete weitere nullte bis n-te Datenabschnitte D_0 bis D_n. Bei diesem Vorgang legt der zweite Slave-Teilnehmer 120₁ ein Senden eines fiktiven korrekten Telegramms 170 zugrunde, dessen Endbereich 157 den gültigen Prüfwert C wiedergeben würde (vgl. erstes Prüfwert-Berechnen TX-CRC). Ferner bildet der zweite Slave-Teilnehmer 120₁ einen dritten Alternativwert C3' durch Anwenden eines vorgegebenen Berechnungsalgorithmus (zum Beispiel Invertieren) auf den dritten Teilwert C3. Dieser wird als kennzeichnender Datenabschnitt 160 bzw. dritter Prüfwert-Datenabschnitt CRC3, welcher hier dem dritten Alternativwert C3' entspricht, nach dem zweiten Prüfwert-Datenabschnitt CRC2 an den nächsten bzw. dritten Slave-Teilnehmer 120₂ gesendet.

Das von dem nächsten bzw. dritten Slave-Teilnehmer 120₂ empfangene Telegramm 150 weist einen einen ungültigen Prüfwert wiedergebenden Endbereich 157 auf, welcher den nullten, ersten und zweiten Prüfwert-Datenabschnitt CRC0, CRC1, CRC2 und den kennzeichnenden Datenabschnitt 160 umfasst. Wie in Figur 12 angedeutet ist, können der nullte, erste und zweite Prüfwert-Datenabschnitt CRC0, CRC1, CRC2 mit dem nullten, ersten und zweiten Teilwert C0, C1, C2 des von dem vorherigen bzw. zweiten Slave-Teilnehmer 120₁ bei der Berechnung des dritten Alternativwerts C3' zugrunde gelegten fiktiven Telegramms 170 (vgl. erstes Prüfwert-Berechnen TX-CRC) übereinstimmen. Aufgrund des einen ungültigen Prüfwert wiedergebenden Endbereichs 157 kann das Telegramm 150 von dem nächsten bzw. dritten Slave-Teilnehmer 120₂ als fehlerhaft erkannt werden. Auch ist das Telegramm 150 für den dritten Slave-Teilnehmer 120₂ durch den kennzeichnenden Datenabschnitt 160 bzw. den dritten Prüfwert-Datenabschnitt CRC3, welcher hier dem dritten Alternativwert C3' entspricht, in nachvollziehbarer Weise für den dritten Slave-Teilnehmer 120₂ als Folgefehler gekennzeichnet.

Hierzu führt der dritte Slave-Teilnehmer 120₂ dieselbe Berechnung durch wie zuvor der zweite Slave-Teilnehmer 120₁, indem der dritte Teilnehmer 120₂ einen fiktiven gültigen Prüfwert C mit dem nullten, ersten, zweiten, dritten Teilwert C0, C1, C2, C3 für die von dem dritten Slave-Teilnehmer 120₂ empfangenen weiteren nullten bis n-ten Datenabschnitte D_0 bis D_n berechnet. Dabei legt der dritte Slave-Teilnehmer 120₂ ein Empfangen eines fiktiven korrekten Telegramms 170 zugrunde, dessen Endbereich 157 den korrekten Prüfwert C wiedergeben würde (vgl. zweites Prüfwert-Berechnen RX-CRC). Ferner ermittelt der dritte Slave-Teilnehmer 120₂ einen dritten Alternativwert C3' durch Anwenden des vorgegebenen Berechnungsalgorithmus auf den dritten Teilwert C3. Falls der berechnete und der empfangene dritte Alternativwert C3' übereinstimmen, kann der dritte Teilnehmer 120₂ die Kennzeichnung erkennen und das Telegramm 150 als Folgefehler berücksichtigen. Hierzu wird der Folgefehler-Fehlerzähler 131 des dritten Teilnehmers 120₂ inkrementiert.

Figur 12 zeigt ferner, dass der dritte Slave-Teilnehmer 120₂ das fehlerhafte Telegramm 150 ebenfalls mit einem kennzeichnenden Datenabschnitt 160 an dessen Ende an den nächsten Slave-Teilnehmer 120 (letzten Slave-Teilnehmer 120₃, vgl. Figur 1) weitersendet (vgl. zweites Senden TX 2). Hierbei führt der dritte Slave-Teilnehmer 120₂ dieselben Schritte durch wie der zweite Slave-Teilnehmer 120₁, indem der kennzeichnende Datenabschnitt 160 wie oben angegeben festgelegt und nach dem zweiten Prüfwert-Datenabschnitt CRC2 gesendet wird.

Es wird darauf hingewiesen, dass die anhand der Diagramme der Figuren 3 bis 12 erläuterten Verfahrensvarianten und Schritte von sämtlichen der Slave-Teilnehmer 120 des Kommunikationsnetzwerks 100 durchgeführt werden können.

Neben den vorstehend beschriebenen und in den Figuren abgebildeten Ausführungsformen sind weitere Ausführungsformen vorstellbar, welche weitere Abwandlungen und/oder Kombinationen von Merkmalen umfassen können.

Eine mögliche Abwandlung besteht zum Beispiel darin, lediglich Erstfehler-Fehlerzähler 130 und gegebenenfalls sich auf Fehlerarten beziehende Fehlerzähler 132 und keine Folgefehler-Fehlerzähler 131 zu verwenden bzw. Slave-Teilnehmer 120 einzusetzen, welche Erstfehler-Fehlerzähler 130 und gegebenenfalls sich auf Fehlerarten beziehende Fehlerzähler 132 und keine Folgefehler-Fehlerzähler 131 aufweisen. Auch auf diese Weise ist ein Lokalisieren von Fehlerquellen, hier anhand der Erstfehler-Fehlerzähler 130, möglich. Das Berücksichtigen eines gekennzeichneten Telegramms 150 als Folgefehler durch einen Teilnehmer 120 kann hierbei dadurch erfolgen, dass der dazugehörige Erstfehler-Fehlerzähler 130 nicht inkrementiert wird. Sofern keine Kennzeichnung vorliegt, kann wie oben angegeben der Erstfehler-Fehlerzähler 130 inkrementiert werden.

Ferner wird darauf hingewiesen, dass das in Figur 1 gezeigte Kommunikationsnetzwerk 100, anhand welchem das Verfahren beschrieben wurde, lediglich eine mögliche beispielhafte Ausgestaltung darstellt. Hiervon abweichend können andere Ausgestaltungen in Betracht kommen, welche zum Beispiel eine andere Anzahl an Slave-Teilnehmern 120 und/oder eine andere Struktur, zum Beispiel eine Mehrfachringstruktur, aufweisen. Auch kann das Kommunikationsnetzwerk 100 ein Ethernet-basiertes System mit einer von der obigen Beschreibung abweichenden Ausgestaltung, zum Beispiel mit einer anderen Übertragungsrate, sein. Möglich ist zum Beispiel eine Übertragungsrate von 100 Mbit/s. Hierbei kann eine 4B/5B-Kodierung vorliegen, d.h. dass 4-Bit-Dateneinheiten kodiert als 5-Bit-Dateneinheiten übertragen werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der von den angehängten Ansprüchen definiert wird.

## Patentansprüche

1. Verfahren zum Betreiben eines Kommunikationsnetzwerks (100), wobei das Kommunikationsnetzwerk (100) mehrere Teilnehmer (120) umfasst,
wobei ein Datenaustausch in dem Kommunikationsnetzwerk (100) zwischen den Teilnehmern (120) in Form von Telegrammen (150) erfolgt,
wobei die Telegramme (150) mehrere Datenabschnitte (155) aufweisen,
wobei die Teilnehmer (120) einen Endbereich (157) der Telegramme (150) als Prüfwert zum Überprüfen einer Fehlerfreiheit von vorhergehenden Datenabschnitten (155) der Telegramme (150) interpretieren,
wobei die Telegramme (150) von den Teilnehmern (120) im Durchlauf verarbeitet werden, so dass die Telegramme (150) von den Teilnehmern (120) empfangen und während des Empfangens an einen jeweils nächsten Teilnehmer weitergesendet werden,
wobei die Teilnehmer (120) für den Fall, dass beim Empfangen eines Telegramms (150)
ein Fehler des Telegramms (150) festgestellt wird, das Senden des Telegramms (150) an einen nächsten Teilnehmer mit einem kennzeichnenden Datenabschnitt (160) des Telegramms (150) an dessen Ende durchführen, so dass das an den nächsten Teilnehmer gesendete Telegramm (150) einen Endbereich (157) aufweist, welcher einen ungültigen Prüfwert wiedergibt,
und wobei mit Hilfe des kennzeichnenden Datenabschnitts (160) das Telegramm (150) für den nächsten Teilnehmer (120) derart gekennzeichnet wird, dass das Telegramm (150) nicht als Erstfehler sondern als Folgefehler zu berücksichtigen ist,
**dadurch gekennzeichnet, dass**
der kennzeichnende Datenabschnitt (160) Bestandteil des als Prüfwert interpretierten Endbereichs (157) des Telegramms (150) ist.

2. Verfahren nach Anspruch 1,
wobei die Teilnehmer (120) den kennzeichnenden Datenabschnitt (160) aus einer Gruppe umfassend mehrere vorgegebene Datenabschnitte, insbesondere eine Gruppe umfassend einen ersten und einen zweiten vorgegebenen Datenabschnitt (V1, V2), auswählen.

3. Verfahren nach Anspruch 2,
wobei für das Auswählen überprüft wird, ob bei einem Senden des ersten vorgegebenen Datenabschnitts (V1) ein gültiger berechneter Prüfwert für zuvor gesendete Datenabschnitte vorliegt,
und wobei bei Vorliegen eines ungültigen berechneten Prüfwerts der erste vorgegebene Datenabschnitt (V1) als kennzeichnender Datenabschnitt (160) und bei Vorliegen eines gültigen berechneten Prüfwerts der zweite vorgegebene Datenabschnitt (V2) als kennzeichnender Datenabschnitt (160) ausgewählt wird.

4. Verfahren nach einem der Ansprüche 2 oder 3,
wobei für das Auswählen überprüft wird, ob bei einem Senden des ersten vorgegebenen Datenabschnitts (V1) und bei einem Senden des zweiten vorgegebenen Datenabschnitts (V2) jeweils ein ungültiger berechneter Prüfwert für zuvor gesendete Datenabschnitte vorliegt,
wobei für den Fall, dass bei einem von dem ersten und dem zweiten vorgegebenen Datenabschnitt (V1, V2) ein gültiger berechneter Prüfwert vorliegt, der andere von dem ersten und dem zweiten vorgegebenen Datenabschnitt (V1, V2) als kennzeichnender Datenabschnitt (160) ausgewählt wird,
und wobei für den Fall, dass jeweils ein ungültiger berechneter Prüfwert vorliegt, derjenige von dem ersten und dem zweiten vorgegebenen Datenabschnitt (V1, V2) als kennzeichnender Datenabschnitt (160) ausgewählt wird, mit dessen Verwendung ein größerer Unterschied zu einem gültigen berechneten Prüfwert für zuvor gesendete Datenabschnitte erzielt werden kann.

5. Verfahren nach Anspruch 1,
wobei die Teilnehmer (120) den kennzeichnenden Datenabschnitt (160) durch Durchführen einer vorgegebenen Berechnung unter Verwendung wenigstens eines zuvor gesendeten Datenabschnitts festlegen.

6. Verfahren nach Anspruch 5,
wobei das Durchführen der vorgegebenen Berechnung ein Ermitteln eines gültigen Prüfwerts für zuvor gesendete Datenabschnitte und ein Bilden eines Alternativwerts (C3') durch Anwenden eines vorgegebenen Berechnungsalgorithmus auf einen Teilwert (C3) des ermittelten gültigen Prüfwerts an dessen Ende umfasst,
und wobei der gebildete Alternativwert (C3') als kennzeichnender Datenabschnitt (160) festgelegt wird.

7. Verfahren nach Anspruch 6,
wobei der Berechnungsalgorithmus ein Invertieren ist.

8. Verfahren nach einem der vorhergehenden Ansprüche,
wobei für den Fall, dass die Teilnehmer (120) beim Empfangen eines Telegramms (150) einen Fehler feststellen und das Telegramm (150) keinen kennzeichnenden Datenabschnitt (160) an dessen Ende aufweist,
ein sich auf einen Erstfehler beziehender Fehlerzähler (130) der Teilnehmer inkrementiert wird.

9. Verfahren nach Anspruch 8,
wobei die Teilnehmer (120) ferner eine Fehlerart des festgestellten Fehlers ermitteln und ein sich auf die Fehlerart beziehender Fehlerzähler (132) der Teilnehmer inkrementiert wird.

10. Verfahren nach einem der vorhergehenden Ansprüche,
wobei für den Fall, dass die Teilnehmer (120) beim Empfangen eines Telegramms (150) einen Fehler feststellen und das Telegramm (150) einen kennzeichnenden Datenabschnitt (160) an dessen Ende aufweist, ein sich auf einen Folgefehler beziehender Fehlerzähler (131) der Teilnehmer (120) inkrementiert wird.

11. Verfahren nach einem der vorhergehenden Ansprüche,
wobei die Teilnehmer (120) für den Fall, dass beim Empfangen eines Telegramms (150) ein Fehler festgestellt wird, abhängig von einer Fehlerart des festgestellten Fehlers das Senden des Telegramms (150) an einen nächsten Teilnehmer durch Senden des kennzeichnenden Datenabschnitts (160) vorzeitig beenden.

12. Verfahren nach einem der vorhergehenden Ansprüche,
wobei das Kommunikationsnetzwerk (100) eine Master-Slave-Struktur aufweist, und/oder wobei das Kommunikationsnetzwerk (100) ein Ethernet-basiertes Feldbussystem, insbesondere ein EtherCAT-Feldbussystem ist,
und/oder wobei als Prüfwert ein CRC-Prüfwert (Cyclic Redundancy Check) verwendet wird.

13. Verfahren nach einem der vorhergehenden Ansprüche,
wobei sich der kennzeichnende Datenabschnitt (160) am Ende des Endbereichs (157) befindet und der letzte Datenabschnitt des Endbereichs (157) ist.

14. Kommunikationsnetzwerk (100), ausgebildet zum Durchführen eines Verfahrens nach einem der vorhergehenden Ansprüche,
wobei das Kommunikationsnetzwerk (100) mehrere Teilnehmer (120) umfasst, wobei ein Datenaustausch in dem Kommunikationsnetzwerk (100) zwischen den Teilnehmern (120) in Form von Telegrammen (150) erfolgt,
wobei die Telegramme (150) mehrere Datenabschnitte (155) aufweisen,
wobei die Teilnehmer (120) ausgebildet sind, einen Endbereich (157) der Telegramme (150) als Prüfwert zum Überprüfen einer Fehlerfreiheit von vorhergehenden Datenabschnitten der Telegramme (150) zu interpretieren,
wobei die Teilnehmer (120) ausgebildet sind, die Telegramme (150) im Durchlauf zu verarbeiten, so dass die Telegramme (150) von den Teilnehmern (120) empfangen und während des Empfangens an einen jeweils nächsten Teilnehmer weitergesendet werden,
wobei die Teilnehmer (120) ausgebildet sind, das Senden eines Telegramms (150) an einen nächsten Teilnehmer mit einem kennzeichnenden Datenabschnitt (160) des Telegramms (150) an dessen Ende durchzuführen, sofern beim Empfangen des Telegramms (150) ein Fehler des Telegramms (150) festgestellt wird, so dass das an den nächsten Teilnehmer gesendete Telegramm (150) einen Endbereich (157) aufweist, welcher einen ungültigen Prüfwert wiedergibt,
und wobei mit Hilfe des kennzeichnenden Datenabschnitts (160) das Telegramm (150) für den nächsten Teilnehmer (120) derart gekennzeichnet wird, dass das Telegramm (150) nicht als Erstfehler sondern als Folgefehler zu berücksichtigen ist,
**dadurch gekennzeichnet, dass**
der kennzeichnende Datenabschnitt (160) Bestandteil des als Prüfwert interpretierten Endbereichs (157) des Telegramms (150) ist.

15. Teilnehmer (120) für ein Kommunikationsnetzwerk (100) nach Anspruch 14, wobei in dem Kommunikationsnetzwerk (100) ein Datenaustausch in Form von Telegrammen (150) erfolgt,
wobei die Telegramme (150) mehrere Datenabschnitte (155) aufweisen, wobei der Teilnehmer (120) ausgebildet ist, einen Endbereich (157) der Telegramme (150) als Prüfwert zum Überprüfen einer Fehlerfreiheit von vorhergehenden Datenabschnitten der Telegramme (150) zu interpretieren,
wobei der Teilnehmer (120) ausgebildet ist, die Telegramme (150) im Durchlauf zu verarbeiten, so dass die Telegramme (150) von dem Teilnehmer empfangen und während des Empfangens an einen nächsten Teilnehmer weitergesendet werden,
wobei der Teilnehmer (120) ausgebildet ist, das Senden eines Telegramms (150) an einen nächsten Teilnehmer mit einem kennzeichnenden Datenabschnitt (160) des Telegramms (150) an dessen Ende durchzuführen, sofern beim Empfangen des Telegramms (150) ein Fehler des Telegramms (150) festgestellt wird, so dass das an den nächsten Teilnehmer gesendete Telegramm (150) einen Endbereich (157) aufweist, welcher einen ungültigen Prüfwert wiedergibt,
und wobei mit Hilfe des kennzeichnenden Datenabschnitts (160) das Telegramm (150) für den nächsten Teilnehmer (120) derart gekennzeichnet wird, dass das Telegramm (150) nicht als Erstfehler sondern als Folgefehler zu berücksichtigen ist,
**dadurch gekennzeichnet, dass**
der kennzeichnende Datenabschnitt (160) Bestandteil des als Prüfwert interpretierten Endbereichs (157) des Telegramms (150) ist.

## Claims

1. Method for operating a communication network (100), wherein the communication network (100) comprises a plurality of subscribers (120),
wherein data are interchanged in the communication network (100) between the subscribers (120) in the form of telegrams (150),
wherein the telegrams (150) have a plurality of data sections (155),
wherein the subscribers (120) interpret an end region (157) of the telegrams (150) as a check value for checking that preceding data sections (155) of the telegrams (150) do not have any errors, wherein the telegrams (150) are processed on-the-fly by the subscribers (120), with the result that the telegrams (150) are received by the subscribers (120) and are forwarded to a next subscriber in each case during reception,
wherein, if an error in a telegram (150) is determined when receiving the telegram (150), the subscribers (120) transmit the telegram (150) to a next subscriber with a characterizing data section (160) of the telegram (150) at its end, with the result that the telegram (150) transmitted to the next subscriber has an end region (157) which represents an invalid check value,
and wherein, with the aid of the characterizing data section (160), the telegram (150) for the next subscriber (120) is characterized such that the telegram (150) should be taken into account as a subsequent error rather than an initial error, **characterized in that** the characterizing data section (160) is part of that end region (157) of the telegram (150) which is interpreted as a check value.

2. Method according to Claim 1,
wherein the subscribers (120) select the characterizing data section (160) from a group comprising a plurality of predefined data sections, in particular a group comprising a first and a second predefined data section (V1, V2).

3. Method according to Claim 2,
wherein, for the selection, a check is carried out in order to determine whether there is a valid calculated check value for previously transmitted data sections when transmitting the first predefined data section (V1),
and wherein the first predefined data section (V1) is selected as the characterizing data section (160) if there is an invalid calculated check value, and the second predefined data section (V2) is selected as the characterizing data section (160) if there is a valid calculated check value.

4. Method according to either of Claims 2 and 3, wherein, for the selection, a check is carried out in order to determine whether there is an invalid calculated check value for previously transmitted data sections in each case when transmitting the first predefined data section (V1) and when transmitting the second predefined data section (V2),
wherein, if there is a valid calculated check value in one of the first and second predefined data sections (V1, V2), the other of the first and second predefined data sections (V1, V2) is selected as the characterizing data section (160),
and wherein, if there is an invalid calculated check value in each case, that data section of the first and second predefined data sections (V1, V2), the use of which makes it possible to achieve a greater difference from a valid calculated check value for previously transmitted data sections, is selected as the characterizing data section (160).

5. Method according to Claim 1,
wherein the subscribers (120) define the characterizing data section (160) by carrying out a predefined calculation using at least one previously transmitted data section.

6. Method according to Claim 5,
wherein the practice of carrying out the predefined calculation comprises determining a valid check value for previously transmitted data sections and forming an alternative value (C3') by applying a predefined calculation algorithm to a partial value (C3) of the determined valid check value at the end thereof,
and wherein the alternative value (C3') formed is defined as the characterizing data section (160).

7. Method according to Claim 6,
wherein the calculation algorithm is inversion.

8. Method according to one of the preceding claims, wherein, if the subscribers (120) determine an error when receiving a telegram (150) and the telegram (150) does not have a characterizing data section (160) at its end,
an error counter (130) of the subscribers which relates to an initial error is incremented.

9. Method according to Claim 8,
wherein the subscribers (120) also determine a type of the determined error, and an error counter (132) of the subscribers which relates to the type of error is incremented.

10. Method according to one of the preceding claims, wherein, if the subscribers (120) determine an error when receiving a telegram (150) and the telegram (150) has a characterizing data section (160) as its end, an error counter (131) of the subscribers (120) which relates to a subsequent error is incremented.

11. Method according to one of the preceding claims, wherein, if an error is determined when receiving a telegram (150), the subscribers (120), depending on a type of the determined error, prematurely terminate the transmission of the telegram (150) to a next subscriber by transmitting the characterizing data section (160).

12. Method according to one of the preceding claims, wherein the communication network (100) has a master/slave structure,
and/or wherein the communication network (100) is an Ethernet-based field bus system, in particular an EtherCAT field bus system,
and/or wherein a CRC (Cyclic Redundancy Check) check value is used as the check value.

13. Method according to one of the preceding claims,
wherein the characterizing data section (160) is at the end of the end region (157) and is the last data section of the end region (157).

14. Communication network (100) designed to carry out a method according to one of the preceding claims, wherein the communication network (100) comprises a plurality of subscribers (120),
wherein data are interchanged in the communication network (100) between the subscribers (120) in the form of telegrams (150),
wherein the telegrams (150) have a plurality of data sections (155),
wherein the subscribers (120) are designed to interpret an end region (157) of the telegrams (150) as a check value for checking that preceding data sections of the telegrams (150) do not have any errors,
wherein the subscribers (120) are designed to process the telegrams (150) on-the-fly, with the result that the telegrams (150) are received by the subscribers (120) and are forwarded to a next subscriber in each case during reception,
wherein the subscribers (120) are designed to transmit a telegram (150) to a next subscriber with a characterizing data section (160) of the telegram (150) at its end if an error in the telegram (150) is determined when receiving the telegram (150), with the result that the telegram (150) transmitted to the next subscriber has an end region (157) which represents an invalid check value,
and wherein, with the aid of the characterizing data section (160), the telegram (150) for the next subscriber (120) is characterized such that the telegram (150) should be taken into account as a subsequent error rather than an initial error, **characterized in that** the characterizing data section (160) is part of that end region (157) of the telegram (150) which is interpreted as a check value.

15. Subscriber (120) for a communication network (100) according to Claim 14,
wherein data are interchanged in the communication network (100) in the form of telegrams (150), wherein the telegrams (150) have a plurality of data sections (155),
wherein the subscriber (120) is designed to interpret an end region (157) of the telegrams (150) as a check value for checking that preceding data sections of the telegrams (150) do not have any errors,
wherein the subscriber (120) is designed to process the telegrams (150) on-the-fly, with the result that the telegrams (150) are received by the subscriber and are forwarded to a next subscriber during reception,
wherein the subscriber (120) is designed to transmit a telegram (150) to a next subscriber with a characterizing data section (160) of the telegram (150) at its end if an error in the telegram (150) is determined when receiving the telegram (150), with the result that the telegram (150) transmitted to the next subscriber has an end region (157) which represents an invalid check value,
and wherein, with the aid of the characterizing data section (160), the telegram (150) for the next subscriber (120) is characterized such that the telegram (150) should be taken into account as a subsequent error rather than an initial error, **characterized in that** the characterizing data section (160) is part of that end region (157) of the telegram (150) which is interpreted as a check value.

## Revendications

1. Procédé de fonctionnement d'un réseau de communication (100), le réseau de communication (100) comprenant une pluralité de périphériques (120),
un échange de données étant effectué dans le réseau de communication (100) entre les périphériques (120) sous forme de télégrammes (150),
les télégrammes (150) comportant une pluralité de portions de données (155),
les périphériques (120) interprétant une zone de fin (157) des télégrammes (150) comme une valeur de test destinée à vérifier que les portions de données précédentes (155) des télégrammes (150) sont exemptes d'erreurs,
les télégrammes (150) étant traités en continu par les périphériques (120) de sorte que les télégrammes (150) soient reçus par les périphériques (120) et transmis à un périphérique suivant pendant la réception,
dans le cas où, lors de la réception d'un télégramme (150), une erreur est détectée dans le télégramme (150), les périphériques (120) envoyant le télégramme (150) à un périphérique suivant en dotant la fin du télégramme (150) d'une portion de données caractérisante (160) de celui-ci de sorte que le télégramme (150) envoyé au périphérique suivant comporte une zone de fin (157) qui reproduit une valeur de test invalide,
et le télégramme (150) destiné au périphérique suivant (120) étant identifié à l'aide de la portion de données caractérisante (160) de manière à ce que le télégramme (150) ne doit pas être pris en compte comme première erreur mais comme erreur ultérieure,
**caractérisé en ce que**
la portion de données caractérisante (160) fait partie de la zone de fin (157) du télégramme (150) qui est interprétée comme valeur de test.

2. Procédé selon la revendication 1,
les périphériques (120) sélectionnant la portion de données caractérisante (160) dans un groupe comprenant une pluralité de portions de données spécifiées, en particulier un groupe comprenant une première et une deuxième portion de données spécifiées (V1, V2).

3. Procédé selon la revendication 2,
une vérification étant effectuée en ce qui concerne la sélection pour savoir si la valeur de test calculée valide pour les portions de données précédemment envoyées est présente lors de l'envoi de la première portion de données spécifiée (V1),
et, en présence d'une valeur de test calculée invalide, la première portion de données spécifiée (V1) étant sélectionnée comme portion de données caractérisante (160) et, en présence d'une valeur de test calculée valide, la deuxième portion de données spécifiée (V2) étant sélectionnée comme portion de données caractérisante (160).

4. Procédé selon l'une des revendications 2 et 3,
une vérification étant effectuée en ce qui concerne la sélection pour savoir si une valeur de test calculée invalide pour des portions de données précédemment envoyées est présente lors de l'envoi de la première portion de données spécifiée (V1) et lors de l'envoi de la deuxième portion de données spécifiée (V2),
dans le cas où une valeur de test calculée valide est présente dans l'une des première et deuxième portions de données spécifiées (V1, V2), l'autre des première et deuxième portions de données spécifiées (V1, V2) est sélectionnée comme portion de données caractérisante (160),
et dans le cas où une valeur de test calculée invalide est présente, celle parmi la première et la deuxième portion de données spécifiées (V1, V2) qui est sélectionnée comme portion de données caractéristique (160) étant celle dont l'utilisation permet d'atteindre une plus grande différence par rapport à une valeur de test calculée valide pour les portions de données précédemment envoyées.

5. Procédé selon la revendication 1,
les périphériques (120) déterminant la portion de données caractérisante (160) en réalisant un calcul spécifié à l'aide d'au moins une portion de données précédemment envoyé.

6. Procédé selon la revendication 5,
la réalisation du calcul spécifié comprenant la détermination d'une valeur de test valide pour des portions de données précédemment envoyées et la formation d'une valeur alternative (C3') par application d'un algorithme de calcul spécifié à une valeur partielle (C3) de la valeur de test valide déterminée à la fin de celle-ci,
et la valeur alternative (C3') formée étant définie comme portion de données caractéristique (160).

7. Procédé selon la revendication 6,
l'algorithme de calcul étant une inversion.

8. Procédé selon l'une des revendications précédentes, dans le cas où les périphériques (120) détectent une erreur lors de la réception d'un télégramme (150) et que le télégramme (150) ne comporte pas de portion de données caractérisante (160) à la fin,
un compteur d'erreurs (130) des périphériques, relatif à une première erreur, étant incrémenté.

9. Procédé selon la revendication 8,
les périphériques (120) déterminant en outre un type d'erreur de l'erreur détectée et un compteur d'erreurs (132) des périphériques, relatif au type d'erreur, étant incrémenté.

10. Procédé selon l'une des revendications précédentes, dans le cas où les périphériques (120) détectent une erreur lors de la réception d'un télégramme (150) et que le télégramme (150) comporte à la fin une portion de données caractérisante (160), un compteur d'erreurs (131) des périphériques (120), relatif à une erreur ultérieure, étant incrémenté.

11. Procédé selon l'une des revendications précédentes, dans le cas où une erreur est détectée lors de la réception d'un télégramme (150), les périphériques (120) terminant prématurément, selon le type d'erreur de l'erreur détectée, l'envoi du télégramme (150) à un périphérique suivant par l'envoi de la portion de données caractérisante (160).

12. Procédé selon l'une des revendications précédentes, le réseau de communication (100) comportant une structure maître-esclave, et/ou le réseau de communication (100) étant un système de bus de terrain basé sur Ethernet, en particulier un système de bus de terrain EtherCAT, et/ou une valeur de test CRC (Cyclic Redundancy Check) étant utilisée comme valeur de test.

13. Procédé selon l'une des revendications précédentes, la portion de données caractérisante (160) étant située à la fin de la zone de fin (157) et étant la dernière portion de données de la zone de fin (157).

14. Réseau de communication (100), conçu pour mettre en œuvre un procédé selon l'une des revendications précédentes,
le réseau de communication (100) comprenant une pluralité de périphériques (120),
un échange de données étant effectué dans le réseau de communication (100) entre les périphériques (120) sous la forme de télégrammes (150),
les télégrammes (150) comportant une pluralité de portions de données (155),
les périphériques (120) étant conçus pour interpréter une zone de fin (157) des télégrammes (150) comme valeur de test pour vérifier que les portions de données précédentes des télégrammes (150) sont exemptes d'erreurs,
les périphériques (120) étant conçus pour traiter les télégrammes (150) en continu de sorte que les télégrammes (150) soient reçus par les périphériques (120) et soient transmis au périphérique suivant lors de la réception, les périphériques (120) étant conçus pour effectuer l'envoi d'un télégramme (150) à un périphérique suivant en le dotant à la fin d'une portion de données caractérisante (160) du télégramme (150) à condition que, lors de la réception du télégramme (150), une erreur est détectée dans le télégramme (150) de sorte que le télégramme (150) envoyé au périphérique suivant comporte une zone de fin (157) qui reproduit une valeur de test invalide,
et le télégramme (150) destiné au périphérique suivant (120) étant caractérisé à l'aide de la portion de données caractérisante (160) de manière à ce que le télégramme (150) ne doive pas être pris en compte comme première erreur mais comme erreur ultérieure,
**caractérisé en ce que**
la portion de données caractérisante (160) fait partie de la zone de fin (157) du télégramme (150) qui est interprétée comme valeur de test.

15. Périphérique (120) destiné à un réseau de communication (100) selon la revendication 14,
un échange de données étant effectué sous forme de télégrammes (150) dans le réseau de communication (100), les télégrammes (150) comportant une pluralité de portions de données (155),
le périphérique (120) étant conçu pour interpréter une zone de fin (157) des télégrammes (150) comme valeur de test destinée à vérifier que les portions de données précédentes des télégrammes (150) sont exemptes d'erreurs,
le périphérique (120) étant conçu pour traiter en continu les télégrammes (150) de sorte que les télégrammes (150) soient reçus par le périphérique et transmis à un périphérique suivant pendant la réception,
le périphérique (120) étant conçu pour envoyer un télégramme (150) à un périphérique suivant en le dotant à la fin d'une portion de données caractérisante (160) du télégramme (150) à condition que, lors de la réception du télégramme (150), une erreur est détectée dans le télégramme (150) de sorte que le télégramme (150) envoyé au périphérique suivant comporte une zone de fin (157) qui reproduit une valeur de test invalide,
et le télégramme (150) destiné au périphérique suivant (120) étant caractérisé à l'aide de la portion de données caractérisante (160) de manière à ce que le télégramme (150) ne doive pas être pris en compte comme première erreur mais comme erreur ultérieure,
**caractérisé en ce que**
la portion de données caractérisante (160) fait partie de la zone de fin (157) du télégramme (150) qui est interprétée comme valeur de test.
